# EUROPEAN PATENT APPLICATION

(11) **EP 4 350 406 A1**
(43) Date of publication of application: **10.04.2024**
(21) Application number: 22199880.0
(22) Date of filing: 05.10.2022
(51) Int. Cl.: G02B 6/42

(54) **REFLECTIVE OPTICAL COUPLING AND BEAM PROFILE SHAPING UNIT, OPTO-ELECTRONIC ASSEMBLY AND OPTO-ELECTRONIC SYSTEM COMPRISING THE SAME**

(71) Applicant: EFFECT Photonics B.V., 5616 LZ Eindhoven (NL)
(72) Inventor: van der Kluit, Rinze Frederik, Eindhoven (NL)
(74) Representative: Kramer-Ograjensek, Petra

(57) **Abstract**

The invention relates to a reflective optical coupling and beam profile shaping unit (1) comprising an optically transparent body (2) having an outer surface that is provided with a first optical interface (3), a second optical interface (4), a first free form reflective area (5) having a first magnification, and a second free form reflective area (6) having a second magnification. Because the first magnification is different from the second magnification, an asymmetric first optical beam profile entering the optically transparent body via the first optical interface can be shaped into a symmetric second optical beam profile exiting the optically transparent body via the second optical interface. Similarly, a symmetric first optical beam profile can be shaped into an asymmetric second optical beam profile.

The invention also relates to an opto-electronic assembly (100) comprising said unit (1), and to an opto-electronic system (200) comprising said assembly (100).

## Description

### FIELD OF THE INVENTION

The present invention relates to a reflective optical coupling and beam profile shaping unit. The invention also relates to an opto-electronic system comprising said reflective optical coupling and beam profile shaping unit. The invention further relates to an opto-electronic system comprising said opto-electronic assembly. The reflective optical coupling and beam profile shaping unit, the opto-electronic assembly and the opto-electronic system can be used for example, but not exclusively, for telecommunication applications, Light Detection and Ranging (LIDAR) or sensor applications.

### BACKGROUND OF THE INVENTION

An opto-electronic system typically comprises an opto-electronic assembly that can comprise an optical receiver, such as an optical fiber, and a photonic integrated circuit (PIC) having an optical source, such as a laser, and an optical interface for allowing optical communication between the optical source and the optical receiver.

The most versatile technology platform for said PIC, especially if it is used in an opto-electronic assembly of an opto-electronic system for telecommunication applications, LIDAR or sensor applications, uses wafers comprising InP-based semiconductor materials. InP-based technology enables monolithic integration of both active components and passive components in one PIC on a single die.

An optical coupling between the optical receiver of said opto-electronic assembly and the optical interface of the PIC of said opto-electronic assembly can typically be established using a micro-optical bench. A known disadvantage of using a micro-optical bench is that a certain degree of hermiticity or some other way of preventing negative influences of moisture, such as condensation, is required. Another known disadvantage of using a micro-optical bench is that optical alignment can be tedious and therefore time-consuming.

Furthermore, the optical beam profile of the optical source of the PIC of said opto-electronic assembly can be asymmetric. The latter can undesirably add to coupling loss of the optical coupling established by the micro-optical bench. In order to mitigate this disadvantageous effect in the event that the optical source of the PIC has an asymmetric optical beam profile, the micro-optical bench can be configured to incorporate optical beam profile shaping components, such as lenses, in order to shape the asymmetric optical beam profile of the optical source into a symmetric optical beam profile. However, this adds to the complexity of the design and the implementation of the micro-optical bench known in the art.

Based on the above, there is a need for providing an optical coupling and beam profile shaping unit that allows at least one of the above-mentioned disadvantages associated with using a known micro-optical bench to be reduced and ultimately to be eliminated. In addition, there is a need for providing an opto-electronic assembly comprising such an optical coupling and beam profile shaping unit. There is also a need for providing an opto-electronic system comprising such an opto-electronic assembly.

### SUMMARY OF THE INVENTION

It is an object of the present invention to provide a reflective optical coupling and beam profile shaping unit that can at least reduce and ultimately eliminate at least one of the above-mentioned and/or other disadvantages associated with using a micro-optical bench known in the art.

It is also an object of the present invention to provide an opto-electronic assembly comprising a reflective optical coupling and beam profile shaping unit according to the invention.

It is another object of the present invention to provide an opto-electronic system comprising an opto-electronic assembly according to the invention.

The reflective optical coupling and beam profile shaping unit, the opto-electronic assembly and the opto-electronic system can be used for example, but not exclusively, for telecommunication applications, LIDAR or sensor applications.

Aspects of the present invention are set out in the accompanying independent and dependent claims. Features from the dependent claims may be combined with features from the independent claim as appropriate and not merely as explicitly set out in the claims. Furthermore, all features may be replaced with other technically equivalent features.

At least one of the abovementioned objects is achieved by a reflective optical coupling and beam profile shaping unit that is suitable for attachment to a photonic integrated circuit, PIC, for covering an optical interface of the PIC, the reflective optical coupling and beam profile shaping unit comprising an optically transparent body having an outer surface that is provided with:
- a first optical interface that is configured and arranged to enable transmission of optical radiation into or out of the optically transparent body, the optical radiation having a first optical beam profile that comprises a first spatial distribution and a second spatial distribution that are arranged orthogonal with respect to each other;
- a second optical interface that is configured and arranged to enable transmission of the optical radiation out of or into the optically transparent body, the optical radiation having a second optical beam profile that at least has a different shape than the first optical beam profile;
- a first free form reflective area and a second free form reflective area that are arranged with respect to each other and with respect to the first optical interface and the second optical interface to provide an optical path for propagation of:
   - optical radiation entering the optically transparent body via the first optical interface towards the second optical interface as a result of reflections successively occurring at the first free form reflective area and the second free form reflective area; or
   - optical radiation entering the optically transparent body via the second optical interface towards the first optical interface, as a result of reflections successively occurring at the second free form reflective area and the first free form reflective area;
   wherein the first free form reflective area is configured to have a first magnification to enable imaging of:
   - a magnified version of the first spatial distribution of the first optical beam profile towards the second optical interface, said magnified version of the first spatial distribution being part of the second optical beam profile; or
   - a magnified version of the first spatial distribution of the second optical beam profile towards the first optical interface, said magnified version of the first spatial distribution being part of the first optical beam profile;
   wherein the second free form reflective area is configured to have a second magnification, which is different from the first magnification of the first free form reflective area, to enable imaging of:
   - a magnified version of the second spatial distribution of the first optical beam profile towards the second optical interface, said magnified version of the second spatial distribution being part of the second optical beam profile; or
   - a magnified version of the second spatial distribution of the second optical beam profile towards the first optical interface, said magnified version of the second spatial distribution being part of the first optical beam profile.

The person skilled in the art will appreciate that the first spatial distribution and the second spatial distribution of the first optical beam profile and of the second optical beam profile, respectively can be referred to as the fast axis and the slow axis, respectively, depending on a difference in divergence speed between the first spatial distribution and the second spatial distribution. In the context of the present invention, the first spatial distribution can be construed as the fast axis, and the second spatial distribution can be construed as the slow axis.

Because the first magnification of the first free form reflective area is different from the second magnification of the second free form reflective area, an asymmetric first optical beam profile can be shaped into a symmetric second optical beam profile. Similarly, a symmetric first optical beam profile can be shaped into an asymmetric second optical beam profile.

The person skilled in the art will appreciate that the first magnification of the first free form reflective area is defined by a ratio of focal lengths of the first free form reflective area. Similarly, the second magnification of the second free form reflective area is defined by a ratio of focal lengths of the second free form reflective area. The first magnification of the first free form reflective area and the second magnification of the second free form reflective area can define a beam profile shaping factor or ratio that can have any value depending on the specific requirements for the first optical beam profile and the second optical beam profile. For example, a beam profile shaping factor or ratio of 3:1 can be used to enable shaping of an asymmetric 1µm×3µm first optical beam profile into a symmetric 3µm×3µm second optical beam profile. Similarly, a beam profile shaping factor or ratio of, for example, 1:1.5 can be used to enable shaping of a symmetric 3µm×3µm first optical beam profile into an asymmetric 3µm×4.5µm second optical beam profile.

An advantage of the reflective optical coupling and beam profile shaping unit according to the invention is that by attaching it to a PIC, the reflective optical coupling and beam profile shaping unit can cover at least an optical interface of the PIC thereby shielding said optical interface from a surrounding environment. In this way, it is possible to at least reduce the need for hermetic packaging that is required if for example a known micro-optical bench comprising mode-shaping optics is used. The optical interface of the PIC can, for example, be an optical waveguide at a facet of the PIC.

Another advantage of the reflective optical coupling and beam profile shaping unit according to the invention is that depending on the actual shape of the first free form reflective area and the second free form reflective area a focused second optical beam profile comprising a focused magnified version of the first spatial distribution of the first optical beam profile and a focused magnified version of the second spatial distribution of the first optical beam profile can be provided at the second optical interface. Similarly, a focused first optical beam profile comprising a focused magnified version of the first spatial distribution of the second optical beam profile and a focused magnified version of the second spatial distribution of the second optical beam profile can be provided at the first optical interface. This will be elucidated further below.

Another advantage of the reflective optical coupling and beam profile shaping unit according to the invention is that the optically transparent body provides an optical path for optical radiation after entering the optically transparent body via the first optical interface or via the second optical interface for that matter, the optical path being shielded from an environment surrounding the reflective optical coupling and beam profile shaping unit. As the optical path is enclosed by the outer surface of the optically transparent body, negative effects of moisture, such as condensation, and/or dust can be reduced. As a result, the need for hermetic packaging solutions can at least be alleviated.

Another advantage of the reflective optical coupling and beam profile shaping unit according to the invention is that all optical functionality required for shaping of a first optical beam profile into an at least differently shaped second optical beam profile in order to reduce coupling loss, and hence improve coupling efficiency, can be achieved by a single optically transparent body. Therefore, the reflective optical coupling and beam profile shaping unit according to the invention requires less optical interfaces for shaping the optical beam profile compared to known micro-optical benches. In addition, optical alignment of the reflective optical coupling and beam profile shaping unit according to the invention is less tedious and therefore less time-consuming compared to optical alignment of known micro-optical benches.

Another advantage of the reflective optical coupling and beam profile shaping unit according to the invention is that optical radiation can be coupled with an improved efficiency between for example a PIC and an optical receiver, such as an optical fiber, without the need of providing the PIC with a spot size converter (SSC). In this way, fabrication of the PIC can be less complicated. In addition, if a fabrication platform does not offer the availability of an SSC, the reflective coupling and beam profile shaping unit according to the invention can provide a solution for achieving improved coupling efficiency.

It is noted that the reflective optical coupling and beam profile shaping unit according to the present invention is a passive device, i.e. it does not require any electrical biasing. Therefore, the reflective optical coupling and beam profile shaping unit does not give rise to an increased electrical power consumption of an opto-electronic assembly or an opto-electronic system in which it is applied.

Based on the above, it can be understood that the reflective optical coupling and beam profile shaping unit according to the present invention allows at least one of the abovementioned disadvantages associated with using known micro-optical benches to be reduced and ultimately to be eliminated.

In an embodiment of the reflective optical coupling and beam profile shaping unit according to the invention, at least one of the first free form reflective area and the second free form reflective area are at least partially covered with a coating that comprises at least one of a dielectric material and a metal. Examples of dielectric materials that can be used are silicon dioxide (SiO₂), titanium dioxide (TiO₂), ditantalum pentoxide (Ta₂O₅). Examples of metals that can be used are gold, aluminum, silver, chrome, nickel. It can be advantageous to at least partially cover at least one of the first free form reflective area and the second free form reflective area with such a coating or at least a part of such a coating to at least partially protect at least one of the first free form reflective area and the second free form reflective area against influences originating from the environment surrounding the outer surface of the optically transparent body of the reflective optical coupling and beam profile shaping unit.

In addition, although the reflective optical coupling and beam profile shaping unit according to the invention relies on total internal reflection at the first free form reflective area and at the second free form reflective area, such a coating can at least partially enhance the reflective properties of at least one of the first free form reflective area and the second free form reflective area.

In an embodiment of the reflective optical coupling and beam profile shaping unit according to the invention, the outer surface of the optically transparent body is provided with a flat reflective area that is arranged with respect to the first optical interface and the first free form reflective area or with respect to the second optical interface and the second free form reflective area to be part of the optical path enabling propagation of:
- optical radiation entering the optically transparent body via the first optical interface towards the second optical interface as a result of reflections successively occurring at:
   - the flat reflective area, the first free form reflective area and the second free form reflective area; or
   - the first free form reflective area, the second free form reflective area and the flat reflective area; or
- optical radiation entering the optically transparent body via the second optical interface towards the first optical interface, as a result of reflections successively occurring at:
   - the flat reflective area, the second free form reflective area and the first free form reflective area; or
   - the second free form reflective area, the first free form reflective area and the flat reflective area.

It is noted that the flat reflective area can be arranged at any suitable location or orientation at the outer surface of the optically transparent body with respect to the first optical interface and the first free form reflective area or with respect to the second optical interface and the second free form reflective area in order to arrange the first optical interface and the second optical interface at any desired location or orientation with respect to each other. In this way, assembly convenience of the reflective optical coupling and beam profile shaping unit can be improved. For example, the flat reflective area can be located and oriented in such a way that the first optical interface and the second optical interface are located at a same side of the optically transparent body. It is noted that depending on the specific requirements of the reflective optical coupling and beam profile shaping unit it is possible to provide the outer surface of the optically transparent body with more than one flat reflective area.

In addition, it is noted that the flat reflective area does not contribute to the shaping of the first optical beam profile into the second optical beam profile, or vice versa, wherein the first optical beam profile and the second optical beam profile at least have different shapes.

In an embodiment of the reflective optical coupling and beam profile shaping unit according to the invention, the first free form reflective area has an ellipsoidal-based shape and is configured to have a first focal length and a second focal length for the first spatial distribution of the first optical beam profile or the second optical beam profile, respectively, the second focal length being larger than the first focal length, and the second free form reflective area has an ellipsoidal-based shape and is configured to have a third focal length and a fourth focal length for the second spatial distribution of the first optical beam profile or the second optical beam profile, respectively, the fourth focal length being smaller than the third focal length, wherein the first optical interface and the first free form reflective area are arranged at a first distance with respect to each other as seen in a propagation direction of the optical radiation along the optical path, the first distance being smaller than or equal to the first focal length of the first free form reflective area, wherein the second optical interface and the first free form reflective area are arranged at a second distance with respect to each other as seen in the propagation direction of the optical radiation along the optical path via the second free form reflective area, the second distance being smaller than or equal to the second focal length of the first free form reflective area, wherein the first optical interface and the second free form reflective area are arranged at a third distance with respect to each other as seen in the propagation direction of the optical radiation along the optical path via the first free form reflective area, the third distance being smaller than or equal to the third focal length of the second free form reflective area, and wherein the second optical interface and the second free form reflective area are arranged at a fourth distance with respect to each other as seen in the propagation direction of the optical radiation along the optical path, the fourth distance being smaller than or equal to the fourth focal length of the second free form reflective area.

The first free form reflective area and the second free form reflective area can be configured starting from ellipsoidal cylinders, i.e. ellipsoids having one infinitely long axis. For achieving optimized beam shaping performance, the ellipsoidal cylinders need to be adapted thereby arriving at free form reflective areas having an ellipsoidal-like or ellipsoidal-based shape. In the context of this invention a free form reflective area having an ellipsoidal-like or ellipsoidal-based shape is referred to as an ellipsoidal-based free form reflective area. An advantage of the first ellipsoidal-based free form reflective area and the second ellipsoidal-based free form reflective area is that the reflective optical coupling and beam profile shaping unit according to the invention, in addition to shaping the first optical beam profile into a differently shaped second optical beam profile, can provide a focused second optical beam profile comprising a focused magnified version of the first spatial distribution of the first optical beam profile and a focused magnified version of the second spatial distribution of the first optical beam profile at the second optical interface without requiring additional optical focusing functionality, such as for example an additional free form reflective area provided at the outer surface of the optically transparent body and/or a lens that is arranged outside the optically transparent body. Similarly, a focused first optical beam profile comprising a focused magnified version of the first spatial distribution of the second optical beam profile and a focused magnified version of the second spatial distribution of the second optical beam profile can be provided at the first optical interface. In this way, a single optically transparent body can provide all optical functionality that is required for shaping of a first optical beam profile of optical radiation emitted by a laser source of a PIC into at least a differently shaped second optical beam profile that is adapted to a cross-section of an optical interface of an optical receiver such as for example an optical fiber, and focusing of the second optical beam profile on the cross-section of the optical interface of the optical receiver that is arranged opposite the second optical interface of the optically transparent body. In this way, the reflective optical coupling and beam profile shaping unit according to the invention can achieve a chip-to-fiber coupling having a reduced optical coupling loss, and hence an improved optical coupling efficiency compared to chip-to-fiber solutions known in the art.

Based on the above, it is noted that the reflective optical coupling and beam profile shaping unit according to the invention requires less optical interfaces for shaping and/or focusing an optical beam profile for example for chip-to-fiber coupling compared to known micro-optical benches. In addition, optical alignment of the reflective optical coupling and beam profile shaping unit according to the invention can be less tedious and therefore less time-consuming compared to optical alignment of known micro-optical benches.

To provide a focused magnified version of the first spatial distribution of the first optical beam profile on the second optical interface, it is required that on the one hand the first optical interface and the first ellipsoidal-based free form reflective area are arranged at a first distance with respect to each other as seen in the propagation direction of the optical radiation along the optical path, wherein the first distance is equal to the first focal length of the first ellipsoidal-based free form reflective area, and on the other hand that the second optical interface and the first ellipsoidal-based free form reflective area are arranged at a second distance with respect to each other as seen in the propagation direction of the optical radiation along the optical path via the second free form reflective area, wherein the second distance is equal to the second focal length of the first free form reflective area. However, in this way the tolerance of the fabrication process of the optically transparent body can be critical.

A more lenient fabrication process of the optically transparent body in accordance with the above-mentioned embodiment can be enabled by arranging on the one hand the first optical interface and the first ellipsoidal-based free form reflective area at a first distance with respect to each other as seen in a propagation direction of the optical radiation along the optical path, wherein the first distance is smaller than the first focal length of the first ellipsoidal-based free form reflective area, and on the other hand the second optical interface and the first ellipsoidal-based free form reflective area are arranged at a second distance with respect to each other as seen in the propagation direction of the optical radiation along the optical path via the second free form reflective area, wherein the second distance is smaller than the second focal length of the first ellipsoidal-based free form reflective area. In this way, the first distance between the first optical interface and the first ellipsoidal-based free form reflective area can be made equal to the first focal length of the first ellipsoidal-based free form reflective area by adding optically transparent material having a same refractive index as the optically transparent material of the optically transparent body to the first optical interface. Similarly, the second distance between the second optical interface and the first ellipsoidal-based free form reflective area can be made equal to the second focal length of the first ellipsoidal-based free form reflective area by adding optically transparent material having the same refractive index as the optically transparent material of the optically transparent body to the second optical interface.

To provide a focused magnified version of the second spatial distribution of the first optical beam profile on the second optical interface, it is required that on the one hand the first optical interface and the second ellipsoidal-based free form reflective area are arranged at a third distance with respect to each other as seen in the propagation direction of the optical radiation along the optical path via the first ellipsoidal-based free form reflective area, wherein the third distance is equal to the third focal length of the second ellipsoidal-based free form reflective area, and on the other hand that the second optical interface and the second ellipsoidal-based free form reflective area are arranged at a fourth distance with respect to each other as seen in the propagation direction of the optical radiation along the optical path, wherein the fourth distance is equal to the fourth focal length of the second free form reflective area. However, as mentioned above, in this way the tolerance of the fabrication process of the optically transparent body can be critical.

A more lenient fabrication process of the optically transparent body in accordance with the above-mentioned embodiment can be enabled by arranging on the one hand the first optical interface and the second ellipsoidal-based free form reflective area at a third distance with respect to each other as seen in a propagation direction of the optical radiation along the optical path via the first ellipsoidal-based free form reflective area, wherein the third distance is smaller than the third focal length of the second ellipsoidal-based free form reflective area, and on the other hand the second optical interface and the second ellipsoidal-based free form reflective area are arranged at a fourth distance with respect to each other as seen in the propagation direction of the optical radiation along the optical path, wherein the fourth distance is smaller than the fourth focal length of the second ellipsoidal-based free form reflective area. In this way, the third distance between the first optical interface and the second ellipsoidal-based free form reflective area can be made equal to the third focal length of the second ellipsoidal-based free form reflective area by adding optically transparent material having a same refractive index as the optically transparent material of the optically transparent body to the first optical interface. Note that, ideally, the application of said optically transparent material on the first optical interface can make the first distance equal to the first focal length of the first ellipsoidal-based free form reflective area and the third distance equal to the third focal length of the second ellipsoidal-based free form reflective area.

Similarly, the fourth distance between the second optical interface and the second ellipsoidal-based free form reflective area can be made equal to the fourth focal length of the second ellipsoidal-based free form reflective area by adding optically transparent material having the same refractive index as the optically transparent material of the optically transparent body to the second optical interface. Note that, ideally, the application of said optically transparent material on the second optical interface can make the second distance equal to the second focal length of the first ellipsoidal-based free form reflective area and the fourth distance equal to the fourth focal length of the second ellipsoidal-based free form reflective area.

It is noted that the first ellipsoidal-based free form reflective area and the second ellipsoidal-based free form reflective area can be configured to provide a focal plane at the first optical interface and the second optical interface, respectively instead of a focal point. The focal plane can have an area of for example at most 1mm×1mm. Such focal planes allow arranging of two optical waveguides next to each other and two optical fibers next to each other at respectively the first optical interface and at the second optical interface of the optically transparent body. In this way each one of the two optical waveguides can be imaged on a respective optical fiber of the two optical fibers. The two optical waveguides can be arranged at a pitch ranging from 4µm to 1mm. The two optical fibers can be arranged at a pitch ranging from 4µm to 2mm.

In an embodiment of the reflective optical coupling and beam profile shaping unit according to the invention, at least one of the first free form reflective area, the second free form reflective area and the flat reflective area are at least partially covered with a coating that comprises at least one of a dielectric material and a metal. As mentioned above, examples of dielectric materials that can be used are silicon dioxide (SiO₂), titanium dioxide (TiO₂), ditantalum pentoxide (Ta₂O₅), whereas examples of metals that can be used are gold, aluminum, silver, chrome, nickel.

Similar to what was mentioned above, it is noted that it can be advantageous to at least partially cover at least one of the first free form reflective area, the second free form reflective area and the flat reflective area with such a coating or at least a part of such a coating to at least partially protect at least one of the first free form reflective area, the second free form reflective area and the flat reflective area against influences originating from the environment surrounding the outer surface of the optically transparent body of the reflective optical coupling and beam profile shaping unit. Furthermore, although the reflective optical coupling and beam profile shaping unit according to the invention relies on total internal reflection such a coating can at least partially enhance the reflective properties of at least one of the first free form reflective area, the second free form reflective area and the flat reflective area.

In an embodiment of the reflective optical coupling and beam profile shaping unit according to the invention, the first free form reflective area has a parabolic-based shape and is configured to have a fifth focal length for the first spatial distribution of the first optical beam profile or the second optical beam profile, respectively, and the second free form reflective area has a parabolic-based shape and is configured to have a sixth focal length for the second spatial distribution of the first optical beam profile or the second optical beam profile, respectively, the sixth focal length being larger than the fifth focal length of the first free form reflective area, wherein the first optical interface and the first free form reflective area are arranged at a fifth distance with respect to each other as seen in a propagation direction of the optical radiation along the optical path, the fifth distance being smaller than or equal to the fifth focal length of the first free form reflective area, and wherein the first optical interface and the second free form reflective area are arranged at a sixth distance with respect to each other as seen in the propagation direction of the optical radiation along the optical path via the first free form reflective area, the sixth distance being smaller than or equal to the sixth focal length of the second free form reflective area.

The first free form reflective area and the second free form reflective area can be configured starting from parabolic reflective surfaces. For achieving optimized beam shaping performance, the parabolic reflective surfaces need to be adapted thereby arriving at free form reflective areas that are parabolic-like or parabolic-based. In the context of this invention a free form reflective area having a parabolic-like or parabolic-based shape is referred to as a parabolic-based free form reflective area.

For optical radiation having a first optical beam profile entering the optically transparent body of the reflective optical coupling and beam profile shaping unit according to the above-described embodiment of the invention via the first optical interface, the first parabolic-based free form reflective area and the first optical interface are arranged at a fifth distance with respect to each other as seen in a propagation direction of the optical radiation along the optical path, wherein the fifth distance is equal to the fifth focal length of the first parabolic-shaped free form reflective area to provide a collimated and magnified version of the first spatial distribution, or fast axis, of the first optical beam profile at the second optical interface of the optically transparent body. Similarly, the second parabolic-based free form reflective area and the first optical interface are arranged at a sixth distance with respect to each other as seen in the propagation direction of the optical radiation along the optical path via the first parabolic-based free form reflective area, wherein the sixth distance is equal to the sixth focal length of the first parabolic-based free form reflective area to provide a collimated and magnified version of the second spatial distribution, or slow axis, of the first optical beam profile at the second optical interface. As the first parabolic-based free form reflective area and the second parabolic-based free form reflective area are configured to have different magnifications, a collimated second optical beam profile can be provided at the second optical interface of the optically transparent body that at least has a different shape than the first optical beam profile.

If the optically transparent body is configured such that said fifth distance is equal to the fifth focal length of the first parabolic-based free form reflective area and said sixth distance is equal to the sixth focal length of the second parabolic-based free form reflective area, the tolerance of the fabrication process of the optically transparent body can be critical. A more lenient fabrication process of the optically transparent body in accordance with the above-mentioned embodiment can be enabled by arranging on the one hand the first optical interface and the first parabolic-based free form reflective area at said fifth distance, wherein the fifth distance is smaller than the fifth focal length of the first parabolic-based free form reflective area, and on the other hand the first optical interface and the second parabolic-based free form reflective area are arranged at said sixth distance, wherein the sixth distance is smaller than the sixth focal length of the second parabolic-based free form reflective area. In this way, the fifth distance between the first optical interface and the first parabolic-based free form reflective area can be made equal to the fifth focal length of the first parabolic-based free form reflective area by adding optically transparent material having a same refractive index as the optically transparent material of the optically transparent body to the first optical interface. Similarly, the sixth distance between the first optical interface and the second parabolic-based free form reflective area can be made equal to the sixth focal length of the second parabolic-based free form reflective area by adding optically transparent material having the same refractive index as the optically transparent material of the optically transparent body to the second optical interface.

In an embodiment of the reflective optical coupling and beam profile shaping unit according to the invention, the outer surface of the optically transparent body is provided with a third free form reflective area that has a parabolic-based shape and is arranged with respect to the second free form reflective area and the second optical interface to be part of the optical path enabling propagation of:
- optical radiation entering the optically transparent body via the first optical interface towards the second optical interface as a result of reflections successively occurring at the first free form reflective area, the second free form reflective area and the third free form reflective area; or
- optical radiation entering the optically transparent body via the second optical interface towards the first optical interface, as a result of reflections successively occurring at the third free form reflective area, the second free form reflective area and the first free form reflective area;
wherein the third free form reflective area is configured to have a seventh focal length, and wherein the second optical interface and the third free form reflective area are arranged at a seventh distance with respect to each other as seen in the propagation direction of the optical radiation along the optical path, the seventh distance being smaller than or equal to the seventh focal length of the third free form reflective area.

As described above, the embodiment of the reflective optical coupling and beam profile shaping unit that comprises two parabolic-based free form reflective areas can provide a second optical beam profile at the second optical interface of the optically transparent body that is a magnified and collimated version of a first optical beam profile that entered the optically transparent body via the first optical interface. Similarly, said embodiment of the reflective optical coupling and beam profile shaping unit can provide a first optical beam profile at the first optical interface of the optically transparent body that is a magnified and collimated version of a second optical beam profile that entered the optically transparent body via the second optical interface. Focusing of these collimated optical beam profiles can be achieved by the additional third parabolic-based free form reflective area in accordance with the last-defined embodiment of the reflective optical coupling and beam profile shaping unit according to the invention. An advantage of applying the additional third parabolic-based free form reflective area instead of for example a lens that is arranged outside the optically transparent body opposite the first optical interface or the second optical interface, respectively can be that negative effects of moisture, such as condensation, can at least be reduced and ultimately be eliminated.

It is noted that depending on the specific requirements of the reflective optical coupling and beam profile shaping unit according to the invention, at least one of the parabolic-based free form reflective areas and/or a possible flat reflective area arranged at the outer surface of the optically transparent body can be provided with a grating structure in order to focus the collimated optical beam profile thereby providing a focused optical beam profile.

To provide a focused second optical beam profile at the second optical interface of the optically transparent body that is a magnified version of a first optical beam profile that entered the optically transparent body via the first optical interface, the second optical interface and the third parabolic-based free form reflective area have to be arranged at said seventh distance with respect to each other as seen in the propagation direction of the optical radiation along the optical path, wherein the seventh distance is equal to the seventh focal length of the third parabolic-based free form reflective area. However, in this way the tolerance of the fabrication process of the optically transparent body can be critical. A more lenient fabrication process of the optically transparent body in accordance with the above-mentioned embodiment can be enabled by arranging the second optical interface and the third parabolic-based free form reflective area at said seventh distance with respect to each other, wherein the seventh distance is smaller than the seventh focal length of the third parabolic-based free form reflective area. In this way, the seventh distance between the second optical interface and the third parabolic-based free form reflective area can be made equal to the seventh focal length of the third parabolic-based free form reflective area by adding optically transparent material having a same refractive index as the optically transparent material of the optically transparent body to the second optical interface.

The person skilled in the art will appreciate that the above-mentioned reasoning also applies for providing a focused first optical beam profile at the first optical interface of the optically transparent body that is a magnified version of a second optical beam profile that entered the optically transparent body via the second optical interface.

It is noted that the parabolic-based free form reflective areas can be configured to provide a focal plane at the first optical interface and the second optical interface, respectively instead of a focal point. The focal plane can have an area of for example at most 1mm×1mm. Such focal planes allow arranging of two optical waveguides next to each other and two optical fibers next to each other at respectively the first optical interface and at the second optical interface of the optically transparent body. In this way each one of the two optical waveguides can be imaged on a respective optical fiber of the two optical fibers. The two optical waveguides can be arranged at a pitch ranging from 4µm to 1mm. The two optical fibers can be arranged at a pitch ranging from 4µm to 2mm.

In an embodiment of the reflective optical coupling and beam profile shaping unit according to the invention, the optically transparent body is provided with at least one recess, each recess being configured to receive at least one optical component, each optical component being configured to manipulate optical radiation passing through the respective optical component and being arranged in a respective recess to be in the optical path between at least one of:
- the first optical interface and the first parabolic-based free form reflective area;
- the first parabolic-based free form reflective area and the second parabolic-based free form reflective area; and
- the second parabolic-based free form reflective area and the second optical interface.

In accordance with the above-described embodiment of the reflective optical coupling and beam profile shaping unit that comprises a first parabolic-based free form reflective area and a second parabolic-based free form reflective area, there is a collimated space between the first optical interface and the first parabolic-based free form reflective area for optical radiation that entered the optically transparent body via the second optical interface. By providing the optically transparent body with a recess between the first optical interface and the first parabolic-based free form reflective area, at least one optical component, such as for example a chip-isolator or a chip-filter, can be arranged in said collimated space. After arranging the at least one optical component in the recess, the recess can be sealed using optically transparent material having the same refractive index as the material of the optically transparent body. In this way, the at least one optical component inside the recess can be protected from negative effects of moisture, such as condensation, and/or dust. As a result, the need for hermetic packaging solutions regarding the reflective optical coupling and beam profile shaping unit according to the present invention can at least be alleviated.

It is noted that for optical radiation that entered the optically transparent body via the first optical interface, there is a collimated space between the second parabolic-based free form reflective area and the second optical interface. Similarly as described above, the optically transparent body can be provided with a recess between the second parabolic-based free form reflective area and the second optical interface for arranging at least one optical component in said collimated space.

In addition, it is noted that in accordance with the above-mentioned embodiment of the reflective optical coupling and beam profile shaping unit, there is a partially collimated space between the first parabolic-based free form reflective area and the second parabolic-based free form reflective area for optical radiation that entered the optically transparent body via the first optical interface as well as for optical radiation that entered the optically transparent body via the second optical interface. The optically transparent body can be provided with a recess in said partially collimated space for arranging at least one optical component in said partially collimated space. At least one of the first parabolic-based free form reflective area and the second parabolic-based free form reflective area can be configured to compensate for aberrations that are added to the optical beam profile by said at least one optical component that is arranged in said recess in said partially collimated space.

In an embodiment of the reflective optical coupling and beam profile shaping unit according to the invention, the optically transparent body is provided with at least one recess, each recess being configured to receive at least one optical component, each optical component being configured to manipulate optical radiation passing through the respective optical component and being arranged in a respective recess to be in the optical path between at least one of:
- the first optical interface and the first parabolic-based free form reflective area;
- the first parabolic-based free form reflective area and the second parabolic-based free form reflective area;
- the second parabolic-based free form reflective area and the third parabolic-based free form reflective area; and
- the third parabolic-based free form reflective area and the second optical interface.

In accordance with the above-described embodiment of the reflective optical coupling and beam profile shaping unit, there is a partially collimated space between the first parabolic-based free form reflective area and the second parabolic-based free form reflective area for optical radiation that entered the optically transparent body via the second optical interface. By providing the optically transparent body with a recess between the first parabolic-based free form reflective area and the second parabolic-based free form reflective area, at least one optical component, such as for example a chip-isolator or a chip-filter, can be arranged in said collimated space. After arranging the at least one optical component in the recess, the recess can be sealed using optically transparent material having the same refractive index as the material of the optically transparent body. In this way, the at least one optical component inside the recess can be protected from negative effects of moisture, such as condensation, and/or dust. As a result, the need for hermetic packaging solutions regarding the reflective optical coupling and beam profile shaping unit according to the present invention can at least be alleviated. It is noted that at least one of the first parabolic-based free form reflective area, the second parabolic-based free form reflective area and the third parabolic-based free form reflective area can be configured to compensate for aberrations that are added to the optical beam profile by said at least one optical component that is arranged in said recess in said partially collimated space.

It is noted that for optical radiation that entered the optically transparent body via the first optical interface, there is a collimated space between the second parabolic-based free form reflective area and the third parabolic-based free form reflective area. Similarly as described above, the optically transparent body can be provided with a recess between the second parabolic-based free form reflective area and the third parabolic-based free form reflective area for arranging at least one optical component in said collimated space.

In addition, it is noted that in accordance with the above-mentioned embodiment of the reflective optical coupling and beam profile shaping unit, the optically transparent body can also be provided with at least one recess for arranging at least one optical component between at least one of the first optical interface and the first parabolic-based free form reflective area, and the second optical interface and the third parabolic-based free form reflective area. At least one of the first parabolic-based free form reflective area, the second parabolic-based free form reflective area and the third parabolic-based free form reflective area can be configured to compensate for aberrations that are added to the optical beam profile by said at least one optical component that is arranged in said at least one recess between at least one of the first optical interface and the first parabolic-based free form reflective area, and the second optical interface and the third parabolic-based free form reflective area.

In an embodiment of the reflective optical coupling and beam profile shaping unit according to the invention, the optically transparent body comprises at least one of glass and a polymer-based material that is transparent for optical radiation having a wavelength in at least a range from 1000nm to 2000nm, preferably from 1300nm to 1600nm. In this way, the reflective optical coupling and beam profile shaping unit can for example, but not exclusively, be used for telecommunication applications, LIDAR or sensor applications. In particular, the wavelength range from 1300nm to 1600nm enables applying the reflective optical coupling and beam profile shaping unit with an InP-based optical radiation source that is part of at least one of an opto-electronic assembly and an opto-electronic system.

For fabricating an optically transparent body that comprises at least one of glass and a polymer-based material, an injection molding process can be used. In the event that the optically transparent body comprises only a polymer-based material or a composition of polymer-based materials, also a lithographic process can be used. The lithographic process can for example involve two photon polymerization (TPP). Suitable polymer-based materials and/or compositions of polymer-based materials for fabricating the optically transparent body can be for example polymethyl methacrylate (PMMA), a polycarbonate (PC), and cyclic olefin copolymer (COC).

The optically transparent body can have a volume in a range from 0.1 mm³ to 200mm³. In this way, the reflective optical coupling and beam profile shaping unit is suitable for chip integration. An advantage of the reflective optical coupling and beam profile shaping unit having a volume in the above-mentioned range is that an opto-electronic assembly and/or an opto-electronic system comprising the reflective optical coupling and beam profile shaping unit can have a reduced footprint.

According to another aspect of the present invention, an opto-electronic assembly is provided comprising:
- a reflective optical coupling and beam profile shaping unit according to the present invention;
- a photonic integrated circuit (PIC) comprising:
   - an optical source and/or an optical detector; and
   - a first optical guiding structure having a third optical interface that is arranged at a first end part of the first optical guiding structure and a fourth optical interface that is arranged at a second end part of the first optical guiding structure, the third optical interface being arranged in optical communication with the optical source or the optical detector, and the fourth optical interface being arranged in optical communication with the first optical interface at the outer surface of the optically transparent body of the reflective optical coupling and beam profile shaping unit, the first optical guiding structure being configured to guide optical radiation emitted by the optical source towards the first optical interface of the optically transparent body or to guide optical radiation from the first optical interface towards the optical detector; and
- a second optical guiding structure having a fifth optical interface that is arranged at a first end part of the second optical guiding structure and a sixth optical interface that is arranged at a second end part of the second optical guiding structure, the fifth optical interface being arranged in optical communication with the second optical interface at the outer surface of the optically transparent body.

As mentioned above, the optical radiation has a wavelength in at least a range from 1000nm to 2000nm, preferably from 1300nm to 1600nm. In particular, the wavelength range from 1300nm to 1600nm enables the optical source of the PIC to be an InP-based optical radiation source, such as for example an InP-based laser. Typically, optical radiation emitted by the optical source exiting the PIC via the first optical guiding structure has an asymmetric first optical beam profile. The second optical guiding structure can for example, but not exclusively, be an optical fiber, an array of optical fibers, an optical waveguide of another PIC or an array of optical waveguides of another PIC.

In the event that the second optical guiding structure comprises an optical fiber that has a core with a symmetric cross-section, the reflective optical coupling and beam profile shaping unit, which is arranged to optically couple the fourth optical interface of the first optical guiding structure of the PIC and the fifth optical interface of the optical fiber, can shape an asymmetric first optical beam profile of optical radiation emitted by the optical source into a symmetric second optical beam profile as a result of the above-described asymmetry between the first magnification of the first free form reflective area of the optically transparent body and the second magnification of the second free form reflective area of the optically transparent body of the reflective optical coupling and beam profile shaping unit. Ideally, the symmetric second optical beam profile of the optical radiation is adapted to the cross-section of the core of the optical fiber that can guide the latter optical radiation towards another optical detector that can be arranged in optical communication with the sixth optical interface of the optical fiber.

Similarly, optical radiation emitted by another optical source and having a symmetric or asymmetric optical beam profile can be guided towards the second optical interface of the optically transparent body via the second optical guiding structure. The reflective optical coupling and beam profile shaping unit can shape the symmetric or asymmetric optical radiation into an asymmetric or symmetric reshaped optical beam profile, respectively. The optical radiation having the reshaped optical beam profile can be guided towards the optical detector of the PIC via the first optical guiding structure. It is noted that the opto-electronic assembly according to the invention can for example, but not exclusively, be used for telecommunication applications, LIDAR or sensor applications.

In an embodiment of the opto-electronic assembly according to the invention, the opto-electronic assembly comprises at least one of:
- a first alignment arrangement that is configured and arranged to keep the fifth optical interface of the second optical guiding structure and the second optical interface of the optically transparent body of the reflective optical coupling and beam profile shaping unit in optical alignment with each other; and
- a second alignment arrangement that is configured and arranged to keep the fourth optical interface of the first optical guiding structure of the PIC and the first optical interface of the optically transparent body in optical alignment with each other.

Depending on the specific requirements of the opto-electronic assembly according to the invention, the first alignment arrangement can comprise one or more parts that are arranged to cooperate for establishing and maintaining the optical alignment of the fifth optical interface of the second optical guiding structure and the second optical interface of the optically transparent body. Similarly, the second alignment arrangement can comprise one or more parts that are arranged to cooperate for establishing and maintaining the optical alignment of the fourth optical interface of the first optical guiding structure of the PIC and the first optical interface of the optically transparent body. An advantage of the first alignment arrangement and the second alignment arrangement can be that it provides a passive way for establishing and maintaining the optical alignment of the respective optical interfaces mentioned.

It is noted that the reflective optical coupling and beam profile shaping unit can be directly attached to at least one of the fourth optical interface of the first optical guiding structure of the PIC and the fifth optical interface of the second optical guiding structure or connected with at least one of the fourth optical interface of the first optical guiding structure of the PIC and the fifth optical interface of the second optical guiding structure via at least one intermediate material. The at least one intermediate material can for example be an index-matching material that is arranged between the fourth optical interface of the first optical guiding structure of the PIC and the first optical interface of the optically transparent body and/or between the fifth optical interface of the second optical guiding structure and the second optical interface of the optically transparent body.

In an embodiment of the opto-electronic assembly according to the invention, the second optical guiding structure comprises at least one optical fiber, and the first alignment arrangement is provided with at least one groove that is configured to receive said at least one optical fiber. In this way, the fifth optical interface of the at least one optical fiber can be optically aligned in a passive way with the second optical interface of the optically transparent body of the reflective optical coupling and beam profile shaping unit. It is noted that depending on a specific design of the opto-electronic assembly according to the invention, at least one of the PIC and the optically transparent body of the reflective optical coupling and beam profile shaping unit can also be provided with the at least one groove. The at least one groove can be a V-shaped groove, but any other suitable shape can also be envisaged.

In an embodiment of the opto-electronic assembly according to the invention, said second alignment arrangement comprises first fixing members and second fixing members that are configured and arranged to associated the optically transparent body of the reflective optical coupling and beam profile shaping unit with at least one of the PIC and the first alignment arrangement, the first fixing members and the second fixing members being configured as at least one of elongated resilient members, elongated form-locking members, and elongated clamping members. Examples of said fixing members are lips and arms that can be configured and arranged in any suitable way and be of any suitable design, for example at least one of resilient, form-locking, and clamping.

According to yet another aspect of the present invention, an opto-electronic system is provided comprising an opto-electronic assembly according to the invention. The opto-electronic system can for example, but not exclusively, be used for telecommunication applications, LIDAR or sensor applications. The opto-electronic system can be one of a transmitter, a receiver, a transceiver, a coherent transmitter, a coherent receiver and a coherent transceiver. Because of the above-mentioned advantages brought about by the reflective optical coupling and beam profile shaping unit according to the invention that is applied in the opto-electronic assembly of the opto-electronic system, the opto-electronic system according to the invention can have an improved performance.

### BRIEF DESCRIPTION OF THE DRAWINGS

Further features and advantages of the invention will become apparent from the description of exemplary and non-limiting embodiments of a reflective optical coupling and beam profile shaping unit according to the present invention, an opto-electronic assembly comprising such a reflective optical coupling and beam profile shaping unit, and an opto-electronic system comprising such an opto-electronic assembly.

The person skilled in the art will appreciate that the described embodiments of the reflective optical coupling and beam profile shaping unit, the opto-electronic assembly, and the opto-electronic system are exemplary in nature only and not to be construed as limiting the scope of protection in any way. The person skilled in the art will realize that alternatives and equivalent embodiments of the reflective optical coupling and beam profile shaping unit, the opto-electronic assembly, and the opto-electronic system can be conceived and reduced to practice without departing from the scope of protection of the present invention.

Reference will be made to the figures on the accompanying drawing sheets. The figures are schematic in nature and therefore not necessarily drawn to scale. Furthermore, equal reference numerals denote equal or similar parts.

On the attached drawing sheets,

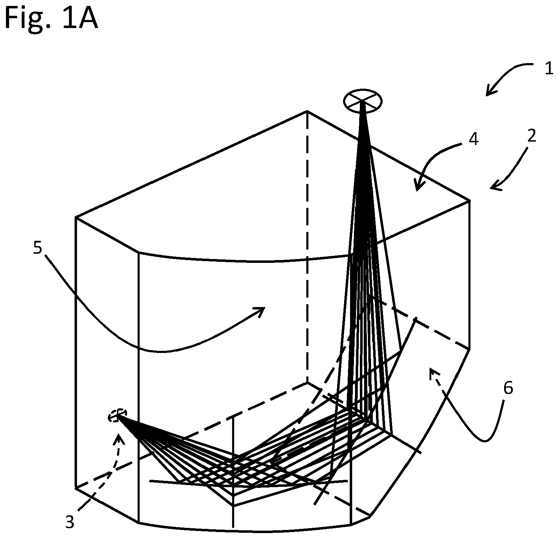

figure 1A shows a schematic isometric view of a first exemplary, non-limiting embodiment of a reflective optical coupling and beam profile shaping unit according to the invention comprising a first ellipsoidal-based free form reflective area and a second ellipsoidal-based free form reflective area, and how an asymmetric optical beam profile is shaped into a focused symmetric optical beam profile;

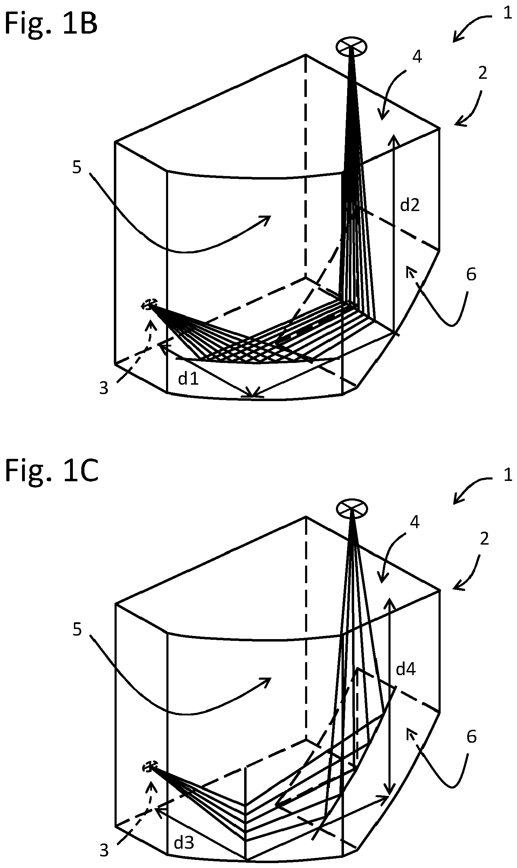

figure 1B schematically shows for the first exemplary, non-limiting embodiment of the reflective optical coupling and beam profile shaping unit shown in figure 1A only how the first spatial distribution, or fast axis, of the first optical beam profile entering the optically transparent body via the first optical interface is shaped into the first spatial distribution of the focused second optical beam profile exiting the optically transparent body via the second optical interface;
figure 1C schematically shows for the first exemplary, non-limiting embodiment of the reflective optical coupling and beam profile shaping unit shown in figure 1A only how the second spatial distribution, or slow axis, of the first optical beam profile entering the optically transparent body via the first optical interface is shaped into the second spatial distribution of the focused second optical beam profile exiting the optically transparent body via the second optical interface;

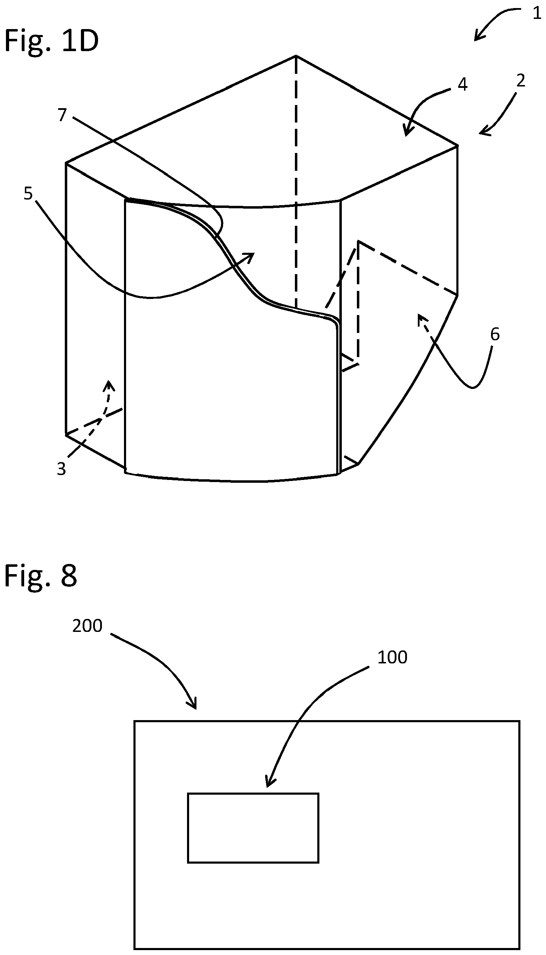

figure 1D shows a schematic isometric view of a second exemplary, non-limiting embodiment of the reflective optical coupling and beam profile shaping unit according to the invention;

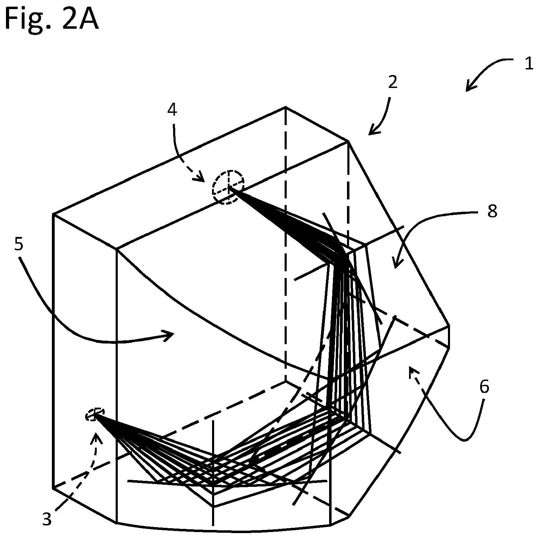

figure 2A shows a schematic isometric view of a third exemplary, non-limiting embodiment of the reflective optical coupling and beam profile shaping unit according to the invention comprising a first ellipsoidal-based free form reflective area, a second ellipsoidal-based free form reflective area, and a flat reflective area, and how an asymmetric optical beam profile is shaped into a focused symmetric optical beam profile;

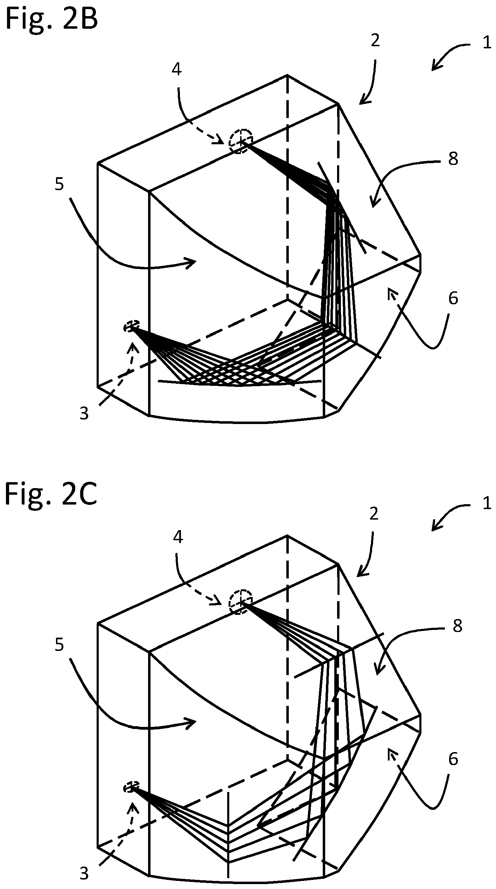

figure 2B schematically shows for the third exemplary, non-limiting embodiment of the reflective optical coupling and beam profile shaping unit shown in figure 2A only how the first spatial distribution, or fast axis, of the first optical beam profile entering the optically transparent body via the first optical interface is shaped into the first spatial distribution of the focused second optical beam profile exiting the optically transparent body via the second optical interface;
figure 2C schematically shows for the third exemplary, non-limiting embodiment of the reflective optical coupling and beam profile shaping unit shown in figure 2A only how the second spatial distribution, or slow axis, of the first optical beam profile entering the optically transparent body via the first optical interface is shaped into the second spatial distribution of the focused second optical beam profile exiting the optically transparent body via the second optical interface;

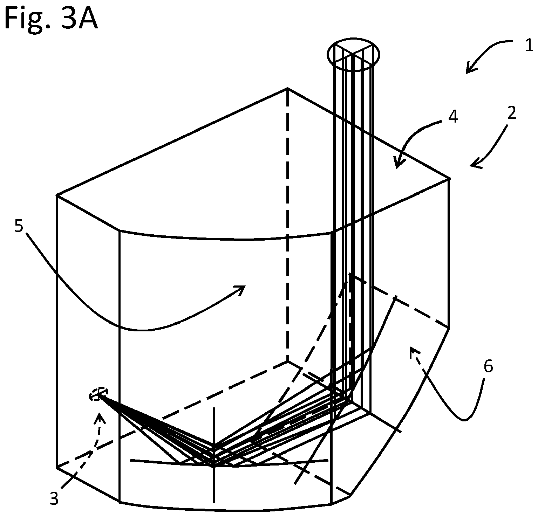

figure 3A shows a schematic isometric view of a fourth exemplary, non-limiting embodiment of a reflective optical coupling and beam profile shaping unit according to the invention comprising a first parabolic-based free form reflective area and a second parabolic-based free form reflective area, and how an asymmetric optical beam profile is shaped into a collimated symmetric optical beam profile;

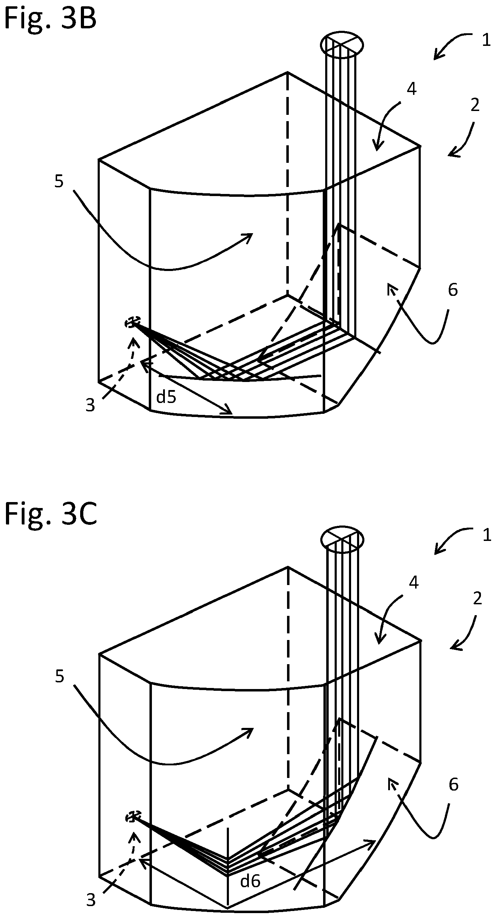

figure 3B schematically shows for the fourth exemplary, non-limiting embodiment of the reflective optical coupling and beam profile shaping unit shown in figure 3A only how the first spatial distribution, or fast axis, of the first optical beam profile entering the optically transparent body via the first optical interface is shaped into the first spatial distribution of the collimated second optical beam profile exiting the optically transparent body via the second optical interface;
figure 3C schematically shows for the fourth exemplary, non-limiting embodiment of the reflective optical coupling and beam profile shaping unit shown in figure 3A only how the second spatial distribution, or slow axis, of the first optical beam profile entering the optically transparent body via the first optical interface is shaped into the second spatial distribution of the collimated second optical beam profile exiting the optically transparent body via the second optical interface;

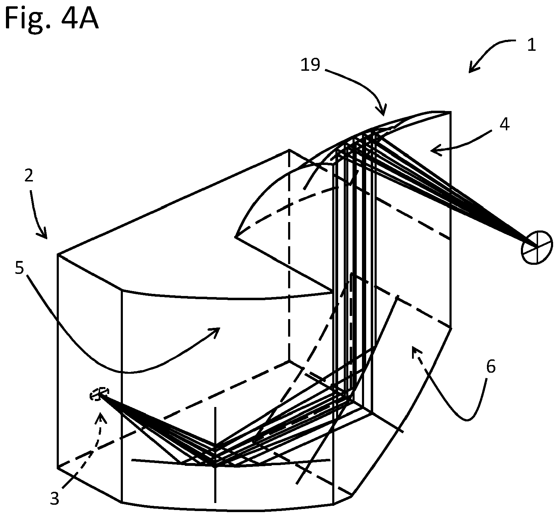

figure 4A shows a schematic isometric view of a fifth exemplary, non-limiting embodiment of a reflective optical coupling and beam profile shaping unit according to the invention comprising a first parabolic-based free form reflective area, a second parabolic-based free form reflective area and a third parabolic-based free form reflective area, and how an asymmetric optical beam profile is shaped into a focused symmetric optical beam profile;

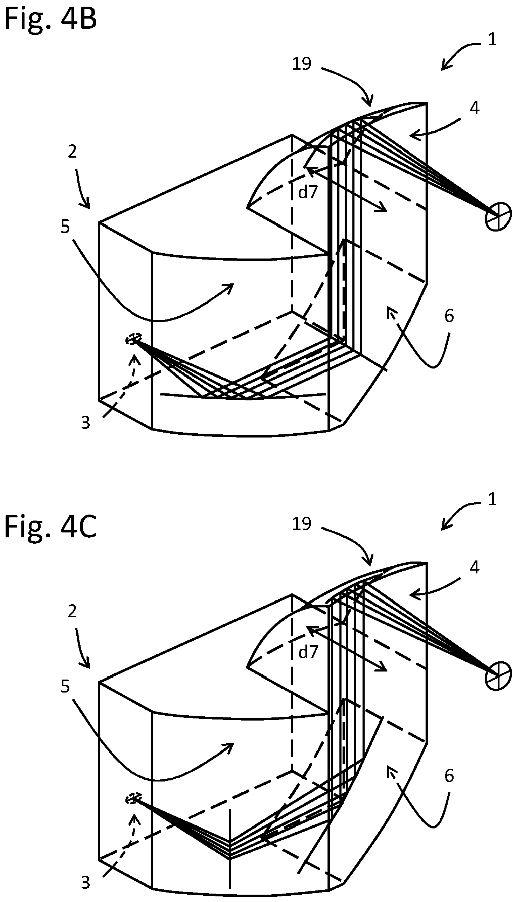

figure 4B schematically shows for the fifth exemplary, non-limiting embodiment of the reflective optical coupling and beam profile shaping unit shown in figure 4A only how the first spatial distribution, or fast axis, of the first optical beam profile entering the optically transparent body via the first optical interface is shaped into the first spatial distribution of the focused second optical beam profile exiting the optically transparent body via the second optical interface;
figure 4C schematically shows for the fifth exemplary, non-limiting embodiment of the reflective optical coupling and beam profile shaping unit shown in figure 4A only how the second spatial distribution, or slow axis, of the first optical beam profile entering the optically transparent body via the first optical interface is shaped into the second spatial distribution of the focused second optical beam profile exiting the optically transparent body via the second optical interface;

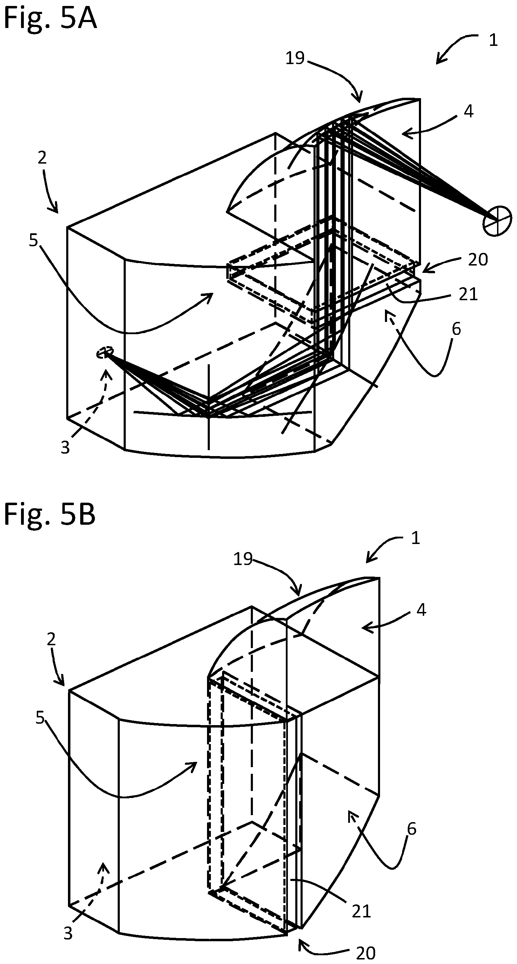

figure 5A shows a schematic isometric view of a sixth exemplary, non-limiting embodiment of a reflective optical coupling and beam profile shaping unit according to the invention comprising a first parabolic-based free form reflective area, a second parabolic-based free form reflective area, a third parabolic-based free form reflective area and an optical component that is arranged in a recess the optically transparent body is provided with at a location of a collimated space between the second parabolic-based free form reflective area and the third parabolic-based free form reflective area, and how an asymmetric optical beam profile is shaped into a focused symmetric optical beam profile;
figure 5B shows a schematic isometric view of a seventh exemplary, non-limiting embodiment of a reflective optical coupling and beam profile shaping unit according to the invention comprising a first parabolic-based free form reflective area, a second parabolic-based free form reflective area, a third parabolic-based free form reflective area and an optical component that is arranged in a recess the optically transparent body is provided with at a location of a collimated space between the first parabolic-based free form reflective area and the second parabolic-based free form reflective area;

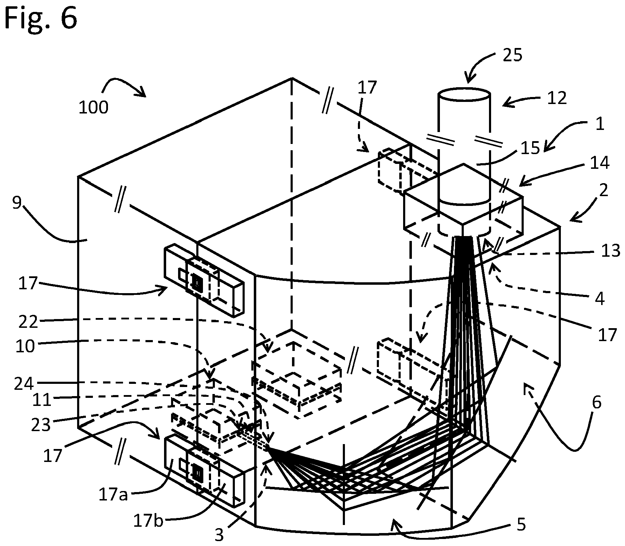

figure 6 shows a schematic isometric view of a first exemplary, non-limiting embodiment of an opto-electronic assembly comprising the first exemplary, non-limiting embodiment of the reflective optical coupling and beam profile shaping unit according to the invention shown in figure 1A;

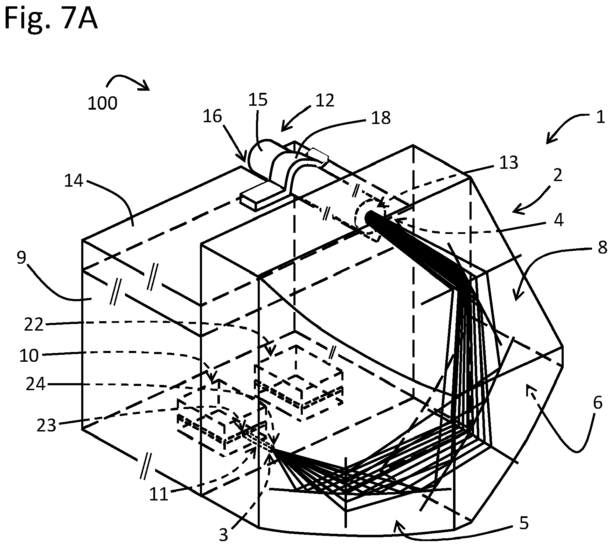

figure 7A shows a schematic isometric view of a second exemplary, non-limiting embodiment of the opto-electronic assembly comprising the third exemplary, non-limiting embodiment of the reflective optical coupling and beam profile shaping unit according to the invention shown in figure 2A;

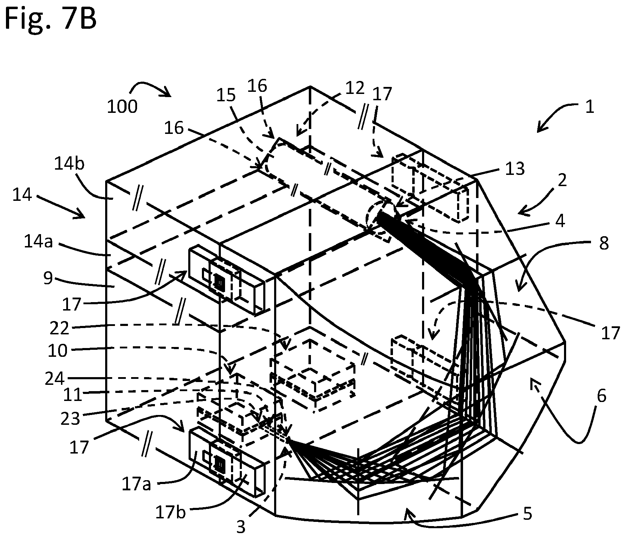

figure 7B shows a schematic isometric view of a third exemplary, non-limiting embodiment of the opto-electronic assembly comprising the third exemplary, non-limiting embodiment of the reflective optical coupling and beam profile shaping unit according to the invention shown in figure 2A;

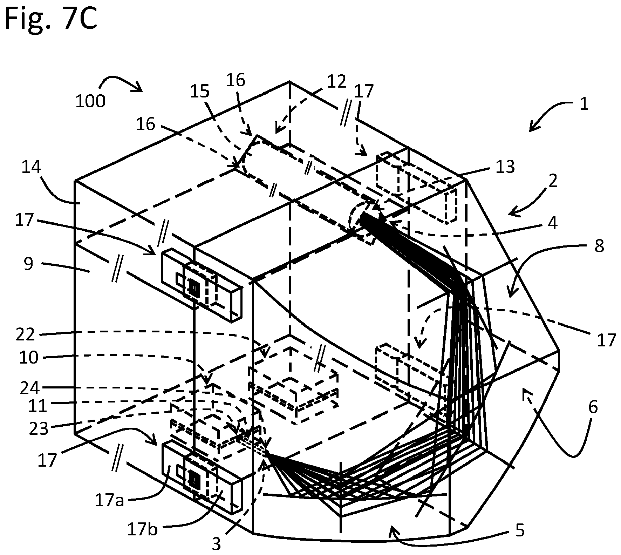

figure 7C shows a schematic isometric view of a fourth exemplary, non-limiting embodiment of the opto-electronic assembly comprising the third exemplary, non-limiting embodiment of the reflective optical coupling and beam profile shaping unit according to the invention shown in figure 2A; and
figure 8 shows a schematic top view of a first exemplary, non-limiting embodiment of an opto-electronic system comprising an opto-electronic assembly according to the present invention.

### DETAILED DESCRIPTION OF EMBODIMENTS

Figure 1A shows a schematic isometric view of a first exemplary, non-limiting embodiment of a reflective optical coupling and beam profile shaping unit 1 according to the invention that comprises an optically transparent body 2 having an outer surface that is provided with a first optical interface 3 and a second optical interface 4 that are arranged at different sides of the optically transparent body 2. The first optical interface 3 and the second optical interface 4 enable transmission of optical radiation into or out of the optically transparent body 2. In the context of the present invention, optical radiation entering the optically transparent body 2 via the first optical interface 3 has a first optical beam profile comprising a first spatial distribution and a second spatial distribution that are arranged orthogonal with respect to each other, whereas optical radiation entering the optically transparent body 2 via the second optical interface 4 has a second optical beam profile that at least has a different shape than the first optical beam profile as will be elucidated below.

The outer surface of the optically transparent body 2 is further provided with a first ellipsoidal-based free form reflective area 5 and a second ellipsoidal-based free form reflective area 6 that are arranged with respect to each other and with respect to the first optical interface 3 and the second optical interface 4 to provide an optical path for propagation of optical radiation entering the optically transparent body 2 via the first optical interface 3 towards the second optical interface 4 as a result of reflections successively occurring at the first ellipsoidal-based free form reflective area 5 and the second ellipsoidal-based free form reflective area 6. Similarly, optical radiation that enters the optically transparent body 2 via the second optical interface 4 is provided with an optical path for propagating towards the first optical interface 3, as a result of reflections successively occurring at the second ellipsoidal-based free form reflective area 6 and the first ellipsoidal-based free form reflective area 5.

The first ellipsoidal-based free form reflective area 5 is configured to have a first magnification to enable imaging of a focused magnified version of the first spatial distribution of the first optical beam profile towards the second optical interface 4, wherein said focused magnified version of the first spatial distribution of the first optical beam profile is part of the focused second optical beam profile. Similarly, a focused magnified version of the first spatial distribution of the second optical beam profile can be directed towards the first optical interface 3, wherein said focused magnified version of the first spatial distribution of the second optical beam profile is part of the first optical beam profile (not shown).

The second ellipsoidal-based free form reflective area 6 is configured to have a second magnification, which is different from the first magnification of the first ellipsoidal-based free form reflective area 5, to enable imaging of a focused magnified version of the second spatial distribution of the first optical beam profile towards the second optical interface 4, wherein said focused magnified version of the second spatial distribution of the first optical beam profile is part of the second optical beam profile. Similarly, a focused magnified version of the second spatial distribution of the second optical beam profile can be directed towards the first optical interface 3, wherein said focused magnified version of the second spatial distribution of the second optical beam profile is part of the first optical beam profile (not shown).

The person skilled in the art will appreciate that the first spatial distribution and the second spatial distribution of the first optical beam profile and of the second optical beam profile, respectively can be referred to as the fast axis and the slow axis, respectively, depending on a difference in divergence speed between the first spatial distribution and the second spatial distribution. In the context of the present invention, the first spatial distribution can be construed as the fast axis, and the second spatial distribution can be construed as the slow axis.

Because the first magnification of the first ellipsoidal-based free form reflective area 5 is different from the second magnification of the second ellipsoidal-based free form reflective area 6, an asymmetric first optical beam profile entering the optically transparent body 2 via the first optical interface 3 can be shaped into a focused symmetric second optical beam profile exiting the optically transparent body 2 via the second optical interface 4. Similarly, a symmetric first optical beam profile can be shaped into a focused asymmetric second optical beam profile.

The person skilled in the art will appreciate that the first magnification of the first ellipsoidal-based free form reflective area 5 is defined by a ratio of focal lengths of the first ellipsoidal-based free form reflective area 5. Similarly, the second magnification of the second ellipsoidal-based free form reflective area 6 is defined by a ratio of focal lengths of the second ellipsoidal-based free form reflective area 6. The first magnification of the first ellipsoidal-based free form reflective area 5 and the second magnification of the second ellipsoidal-based free form reflective area 6 can define a beam profile shaping factor or ratio that can have any value depending on the specific requirements for the first optical beam profile and the second optical beam profile. For example, a beam profile shaping factor or ratio of 3:1 can be used to enable shaping of an asymmetric 1µm×3µm first optical beam profile into a symmetric 3µm×3µm second optical beam profile. Similarly, a beam profile shaping factor or ratio of, for example, 1:1.5 can be used to enable shaping of a symmetric 3µm×3µm first optical beam profile into an asymmetric 3µm×4.5µm second optical beam profile.

Figure 1A shows that the optically transparent body 2 provides an optical path for optical radiation after entering the optically transparent body 2 via the first optical interface 3 or via the second optical interface 4, wherein the optical path is shielded from an environment surrounding the reflective optical coupling and beam profile shaping unit 1. As mentioned above, because the optical path is enclosed by the outer surface of the optically transparent body 2, negative effects of moisture, such as condensation, and/or dust can be reduced. As a result, the need for hermetic packaging solutions can at least be alleviated.

The optically transparent body 2 can comprise at least one of glass and a polymer-based material that is transparent for optical radiation having a wavelength in at least a range from 1000nm to 2000nm, preferably from 1300nm to 1600nm. In this way, the reflective optical coupling and beam profile shaping unit 1 can for example, but not exclusively, be used for telecommunication applications, LIDAR or sensor applications. In particular, the wavelength range from 1300nm to 1600nm enables applying the reflective optical coupling and beam profile shaping unit 1 with an InP-based optical radiation source that is part of at least one of an opto-electronic assembly and an opto-electronic system. Suitable polymer-based materials and/or compositions of polymer-based materials for fabricating the optically transparent body 2 can be for example polymethyl methacrylate (PMMA), a polycarbonate (PC), and cyclic olefin copolymer (COC).

The optically transparent body 2 can have a volume in a range from 0.1mm³ to 200mm³. An advantage of the reflective optical coupling and beam profile shaping unit 1 having a volume in the above-mentioned range is that an opto-electronic assembly and/or an opto-electronic system comprising the reflective optical coupling and beam profile shaping unit 1 can have a reduced footprint.

For the sake of clarity, figure 1B schematically shows for the first exemplary, non-limiting embodiment of the reflective optical coupling and beam profile shaping unit 1 shown in figure 1A only how the first spatial distribution, or fast axis, of the first optical beam profile entering the optically transparent body 2 via the first optical interface 3 is shaped into the first spatial distribution of the focused second optical beam profile exiting the optically transparent body 2 via the second optical interface 4.

The first ellipsoidal-based free form reflective area 5 is configured to have a first focal length and a second focal length for the first spatial distribution of the first optical beam profile or the second optical beam profile, respectively. The second focal length is larger than the first focal length.

Figure 1B shows that the first optical interface 3 and the first ellipsoidal-based free form reflective area 5 are arranged at a first distance, d1, with respect to each other as seen in a propagation direction of the optical radiation along the optical path. The first distance, d1, is indicated with a double-sided arrow. In accordance with the first exemplary, non-limiting embodiment of a reflective optical coupling and beam profile shaping unit 1, the first distance, d1, is equal to the first focal length of the first ellipsoidal-based free form reflective area 5. As mentioned above, the first distance, d1, can initially be smaller than the first focal length in order to enable a more lenient fabrication process of the optically transparent body 2.

Figure 1B shows that the second optical interface 4 and the first ellipsoidal-based free form reflective area 5 are arranged at a second distance, d2, with respect to each other as seen in the propagation direction of the optical radiation along the optical path via the second ellipsoidal-based free form reflective area 6. The second distance, d2, is indicated with a nodded double-sided arrow. In accordance with the first exemplary, non-limiting embodiment of a reflective optical coupling and beam profile shaping unit 1, the second distance, d2, is equal to the second focal length of the first ellipsoidal-based free form reflective area 5. As mentioned above, the second distance, d2, can initially be smaller than the second focal length in order to enable a more lenient fabrication process of the optically transparent body 2.

For the sake of clarity, figure 1C schematically shows for the first exemplary, non-limiting embodiment of the reflective optical coupling and beam profile shaping unit 1 shown in figure 1A only how the second spatial distribution, or slow axis, of the first optical beam profile entering the optically transparent body 2 via the first optical interface 3 is shaped into the second spatial distribution of the focused second optical beam profile exiting the optically transparent body 2 via the second optical interface 4.

The second ellipsoidal-based free form reflective area 6 is configured to have a third focal length and a fourth focal length for the second spatial distribution of the first optical beam profile or the second optical beam profile, respectively. The fourth focal length is smaller than the third focal length.

Figure 1C shows that the first optical interface 3 and the second ellipsoidal-based free form reflective area 6 are arranged at a third distance, d3, with respect to each other as seen in the propagation direction of the optical radiation along the optical path via the first ellipsoidal-based free form reflective area 5. The third distance, d3, is indicated with a nodded double-sided arrow. In accordance with the first exemplary, non-limiting embodiment of a reflective optical coupling and beam profile shaping unit 1, the third distance, d3, is equal to the third focal length of the second ellipsoidal-based free form reflective area 6. As mentioned above, the third distance, d3, can initially be smaller than the third focal length in order to enable a more lenient fabrication process of the optically transparent body 2.

Figure 1C shows that the second optical interface 4 and the second ellipsoidal-based free form reflective area 6 are arranged at a fourth distance, d4, with respect to each other as seen in a propagation direction of the optical radiation along the optical path. The fourth distance, d4, is indicated with a double-sided arrow. In accordance with the first exemplary, non-limiting embodiment of a reflective optical coupling and beam profile shaping unit 1, the fourth distance, d4, is equal to the fourth focal length of the second ellipsoidal-based free form reflective area 6. As mentioned above, the fourth distance, d4, can initially be smaller than the fourth focal length in order to enable a more lenient fabrication process of the optically transparent body 2.

A comparison of figures 1B and 1C shows that the first spatial distribution, or fast axis, starts to converge upon reflecting at the first ellipsoidal-based free form reflecting area 5, whereas the second spatial distribution, or slow axis, continues to diverge upon reflecting at the first ellipsoidal-based free form reflecting area 5. Upon reflecting at the second ellipsoidal-based free form reflecting area 6, also the second spatial distribution, or slow axis, starts to converge, and both the converging fast axis and slow axis propagate towards the optical output area 4 of the outer surface of the optically transparent body 2 being the respective first spatial distribution and second spatial distribution of the focused second optical beam profile that at least has a different shape than the first optical beam profile that entered the optically transparent body 2 via the first optical interface 3.

Figure 1D shows a schematic isometric view of a second exemplary, non-limiting embodiment of the reflective optical coupling and beam profile shaping unit 1 according to the invention. The second exemplary, non-limiting embodiment of the reflective optical coupling and beam profile shaping unit 1 shown in figure 1D only differs from the first exemplary, non-limiting embodiment of the reflective optical coupling and beam profile shaping unit 1 schematically shown in figures 1A, 1B and 1C in that a part of the first ellipsoidal-based free form reflective area 5 is partially covered with a coating 7.

The coating 7 can comprise at least one of a dielectric material and a metal. Examples of dielectric materials that can be used are silicon dioxide (SiO₂), titanium dioxide (TiO₂), ditantalum pentoxide (Ta₂O₅). Examples of metals that can be used are gold, aluminum, silver, chrome, nickel.

The coating 7 can achieve enhanced protection of the covered part of the first ellipsoidal free form reflective area 5 against influences originating from the environment surrounding the reflective optical coupling and beam profile shaping unit 1. In addition, although the reflective optical coupling and beam profile shaping unit 1 according to the invention relies on total internal reflection at the first ellipsoidal-based free form reflective area 5 and at the second ellipsoidal-based free form reflective area 6, the partially applied coating 7 can achieve enhanced reflective properties of the covered part of the first ellipsoidal-based free form reflective area 5.

Figure 2A shows a schematic isometric view of a third exemplary, non-limiting embodiment of the reflective optical coupling and beam profile shaping unit 1 according to the invention comprising a first ellipsoidal-based free form reflective area 5, a second ellipsoidal-based free form reflective area 6 and a flat reflective area 8, and how an asymmetric optical beam profile entering the optically transparent body 2 via the first optical interface 3 can be shaped into a focused symmetric optical beam profile exiting the optically transparent body 2 via the second optical interface 4 or vice versa.

Figure 2A shows that the reflective area 8 of the outer surface of the optically transparent body 2 is arranged with respect to the second ellipsoidal-based free form reflective area 6 such that the second optical interface 4 and the first optical interface 3 are arranged at the same side of the optically transparent body 2. It is noted that the flat reflective area 8 can be arranged at any suitable location at the outer surface of the optically transparent body 2 with respect to the first optical interface 3 and the first ellipsoidal-based free form reflective area 5 or with respect to the second optical interface 4 and the second ellipsoidal-based free form reflective area 6 in order to arrange the first optical interface 3 and the second optical interface 4 at any desired location and orientation with respect to each other at the outer surface of the optically transparent body 2. In this way, assembly convenience of the reflective optical coupling and beam profile shaping unit 1 can be improved.

Figure 2A shows that the flat reflective area 8 is part of the optical path for optical radiation propagating through the inside of the optically transparent body 2 thereby enabling optical radiation entering the optically transparent body 2 via the first optical interface 3 to be directed towards the second optical interface 4 as a result of reflections successively occurring at the first ellipsoidal-based free form reflective area 5, the second ellipsoidal-based free form reflective area 6 and the flat reflective area 8. It will be clear that optical radiation entering the optically transparent body 2 via the second optical interface 4 can be directed towards the first optical interface 3 as a result of reflections successively occurring at the flat reflective area 8, the second ellipsoidal-based free form reflective area 6 and the first ellipsoidal-based free form reflective area 5. It is noted that the flat reflective area 8 does not contribute to the shaping of the first optical beam profile into the second optical beam profile, or vice versa, wherein the first optical beam profile and the second optical beam profile at least have different shapes.

It will be clear that at least one of the first ellipsoidal-based free form reflective area 5, the second ellipsoidal-based free form reflective area 6 and the flat reflective area 8 can at least partially be covered with the coating 7 shown in figure 1D in order to at least partially protect at least one of these reflective surfaces against influences originating from the environment surrounding the outer surface of the optically transparent body 2 and/or to at least partially enhance the reflective properties of at least one of these reflective surfaces.

For the sake of clarity, figure 2B schematically shows for the third exemplary, non-limiting embodiment of the reflective optical coupling and beam profile shaping unit 1 shown in figure 2A only how the first spatial distribution, or fast axis, of the first optical beam profile entering the optically transparent body 2 via the first optical interface 3 is shaped into the first spatial distribution of the focused second optical beam profile exiting the optically transparent body 2 via the second optical interface 4.

For the sake of clarity, figure 2C schematically shows for the third exemplary, non-limiting embodiment of the reflective optical coupling and beam profile shaping unit 1 shown in figure 2A only how the second spatial distribution, or slow axis, of the first optical beam profile entering the optically transparent body 2 via the first optical interface 3 is shaped into the second spatial distribution of the focused second optical beam profile exiting the optically transparent body 2 via the second optical interface 4.

Figure 3A shows a schematic isometric view of a fourth exemplary, non-limiting embodiment of a reflective optical coupling and beam profile shaping unit 1 according to the invention comprising a first parabolic-based free form reflective area 5 and a second parabolic-based free form reflective area 6, and how an asymmetric optical beam profile that enters the optically transparent body 2 via the first optical interface 3 can be shaped into a collimated symmetric optical beam profile that exits the optically transparent body 2 via the second optical interface 4.

The first parabolic-based free form reflective area 5 is configured to have a first magnification to enable imaging of a collimated magnified version of the first spatial distribution of the first optical beam profile towards the second optical interface 4, wherein said collimated magnified version of the first spatial distribution of the first optical beam profile is part of the collimated second optical beam profile. Similarly, a collimated magnified version of the first spatial distribution of the second optical beam profile can be directed towards the first optical interface 3, wherein said collimated magnified version of the first spatial distribution of the second optical beam profile is part of the first optical beam profile (not shown).

The second parabolic-based free form reflective area 6 is configured to have a second magnification, which is different from the first magnification of the first parabolic-based free form reflective area 5, to enable imaging of a collimated magnified version of the second spatial distribution of the first optical beam profile towards the second optical interface 4, wherein said collimated magnified version of the second spatial distribution of the first optical beam profile is part of the second optical beam profile. Similarly, a collimated magnified version of the second spatial distribution of the second optical beam profile can be directed towards the first optical interface 3, wherein said collimated magnified version of the second spatial distribution of the second optical beam profile is part of the first optical beam profile (not shown).

For the sake of clarity, figure 3B schematically shows for the fourth exemplary, non-limiting embodiment of the reflective optical coupling and beam profile shaping unit 1 shown in figure 3A only how the first spatial distribution, or fast axis, of the first optical beam profile entering the optically transparent body 2 via the first optical interface 3 is shaped into the first spatial distribution of the collimated second optical beam profile exiting the optically transparent body 2 via the second optical interface 4.

The first parabolic-based free form reflective area 5 is configured to have a fifth focal length for the first spatial distribution of the first optical beam profile or the second optical beam profile, respectively. Figure 3B shows that the first optical interface 3 and the first parabolic-based free form reflective area 5 are arranged at a fifth distance, d5, with respect to each other as seen in a propagation direction of the optical radiation along the optical path. The fifth distance, d5, is indicated with a double-sided arrow. In accordance with the fourth exemplary, non-limiting embodiment of the reflective optical coupling and beam profile shaping unit 1, the fifth distance, d5, is equal to the fifth focal length of the first parabolic-based free form reflective area 5. As mentioned above, the fifth distance, d5, can initially be smaller than the fifth focal length in order to enable a more lenient fabrication process of the optically transparent body 2.

For the sake of clarity, figure 3C schematically shows for the fourth exemplary, non-limiting embodiment of the reflective optical coupling and beam profile shaping unit 1 shown in figure 3A only how the second spatial distribution, or slow axis, of the first optical beam profile entering the optically transparent body 2 via the first optical interface 3 is shaped into the second spatial distribution of the collimated second optical beam profile exiting the optically transparent body 2 via the second optical interface 4.

The second parabolic-based free form reflective area 6 is configured to have a sixth focal length for the second spatial distribution of the first optical beam profile or the second optical beam profile, respectively. The sixth focal length is larger than the fifth focal length of the first parabolic-based free form reflective area 5. Figure 3C shows that the first optical interface 3 and the second parabolic-based free form reflective area 6 are arranged at a sixth distance, d6, with respect to each other as seen in the propagation direction of the optical radiation along the optical path via the first parabolic-based free form reflective area 5. The sixth distance, d6, is indicated with a nodded double-sided arrow. In accordance with the fourth exemplary, non-limiting embodiment of the reflective optical coupling and beam profile shaping unit 1, the sixth distance, d6, is equal to the sixth focal length of the second parabolic-based free form reflective area 6. As mentioned above, the sixth distance, d6, can initially be smaller than the sixth focal length in order to enable a more lenient fabrication process of the optically transparent body 2.

From a comparison of figures 3B and 3C it can be noted that the first spatial distribution, or fast axis, is collimated upon reflecting at the first parabolic-based free form reflecting area 5, whereas the second spatial distribution, or slow axis, continues to diverge upon reflecting at the first parabolic-based free form reflecting area 5. Upon reflecting at the second parabolic-based free form reflecting area 6, also the second spatial distribution, or slow axis, is collimated, and both the collimated fast axis and slow axis propagate towards the optical output area 4 of the outer surface of the optically transparent body 2 being the respective first spatial distribution and second spatial distribution of the collimated second optical beam profile that at least has a different shape than the first optical beam profile that entered the optically transparent body 2 via the first optical interface 3.

Figure 4A shows a schematic isometric view of a fifth exemplary, non-limiting embodiment of a reflective optical coupling and beam profile shaping unit 1 according to the invention comprising a first parabolic-based free form reflective area 5, a second parabolic-based free form reflective area 6 and a third parabolic-based free form reflective area 19, and how an asymmetric optical beam profile that enters the optically transparent body 2 via the first optical interface 3 is shaped into a focused symmetric optical beam profile that exits the optically transparent body 2 via the second optical interface 4 or vice versa.

Figure 4A shows that the outer surface of the optically transparent body 2 is provided with a third parabolic-based free form reflective area 19 that has a 3D curvature and that is arranged with respect to the second parabolic-based free form reflective area 6 and the second optical interface 4 to be part of the optical path for optical radiation propagating through the inside of the optically transparent body 2 thereby enabling propagation of optical radiation entering the optically transparent body 2 via the first optical interface 3 towards the second optical interface 4 as a result of reflections successively occurring at the first parabolic-based free form reflective area 5, the second parabolic-based free form reflective area 6 and the third parabolic-based free form reflective area 19. It is noted that optical radiation entering the optically transparent body 2 via the second optical interface 4 can be directed towards the first optical interface 3 as a result of reflections successively occurring at the third parabolic-based free form reflective area 19, the second parabolic-based free form reflective area 6 and the first parabolic-based free form reflective area 5.

It is noted that at least one of the first parabolic-based free form reflective area 5, the second parabolic-based free form reflective area 6 and the third parabolic-based free form reflective area 19 can at least partially be covered with the coating 7 shown in figure 1D in order to at least partially protect at least one of these reflective surfaces against influences originating from the environment surrounding the outer surface of the optically transparent body 2 and/or to at least partially enhance the reflective properties of at least one of these reflective surfaces.

For the sake of clarity, figure 4B schematically shows for the fifth exemplary, non-limiting embodiment of the reflective optical coupling and beam profile shaping unit 1 shown in figure 4A only how the first spatial distribution, or fast axis, of the first optical beam profile entering the optically transparent body 2 via the first optical interface 3 is shaped into the first spatial distribution of the focused second optical beam profile exiting the optically transparent body 2 via the second optical interface 4.

For the sake of clarity, figure 4C schematically shows for the fifth exemplary, non-limiting embodiment of the reflective optical coupling and beam profile shaping unit 1 shown in figure 4A only how the second spatial distribution, or slow axis, of the first optical beam profile entering the optically transparent body 2 via the first optical interface 3 is shaped into the second spatial distribution of the focused second optical beam profile exiting the optically transparent body 2 via the second optical interface 4.

Having regard to both figures 4B and 4C, it is noted that the third parabolic-based free form reflective area 19 is configured to have a seventh focal length, and that the second optical interface 4 and the third free form reflective area 19 are arranged at a seventh distance, d7, with respect to each other as seen in the propagation direction of the optical radiation along the optical path. The seventh distance, d7, is indicated with a double-sided arrow. In accordance with the fifth exemplary, non-limiting embodiment of the reflective optical coupling and beam profile shaping unit 1, the seventh distance, d7, is equal to the seventh focal length of the third parabolic-based free form reflective area 19 for providing a focused second optical beam profile at the second optical interface 4 that is a magnified version of a first optical beam profile that entered the optically transparent body 2 via the first optical interface 3. As mentioned above, the seventh distance, d7, can initially be smaller than the seventh focal length in order to enable a more lenient fabrication process of the optically transparent body 2.

It is noted that the above-mentioned reasoning also applies for providing a focused first optical beam profile at the first optical interface 3 of the optically transparent body 2 that is a magnified version of a second optical beam profile that entered the optically transparent body 2 via the second optical interface 4.

Figure 5A shows a schematic isometric view of a sixth exemplary, non-limiting embodiment of a reflective optical coupling and beam profile shaping unit 1 according to the invention comprising a first parabolic-based free form reflective area 5, a second parabolic-based free form reflective area 6, a third parabolic-based free form reflective area 19 and an optical component 21 that is arranged in a recess 20 the optically transparent body 2 is provided with. The optical component 21 is arranged to be in the optical path for optical radiation propagating through the optically transparent body 2. The component 21 can be any suitable component, such as for example a chip-isolator or a chip-filter, that is configured to manipulate optical radiation passing through it. The optical component 21 is arranged in a recess 20 that is arranged between the second parabolic-based free form reflective area 6 and the third parabolic-based free form reflective area 19 because for optical radiation that enters the optically transparent body 2 via the first optical interface 3, there is a collimated space between the second parabolic-based free form reflective area 6 and the third parabolic-based free form reflective area 19 as shown in figure 5A.

After arranging the optical component 21 in the recess 20, the recess 20 can be sealed using optically transparent material having the same refractive index as the material of the optically transparent body 2 (not shown). In this way, the optical component 21 inside the recess 20 can be protected from negative effects of moisture, such as condensation, and/or dust. As a result, the need for hermetic packaging solutions regarding the reflective optical coupling and beam profile shaping unit 1 according to the present invention can at least be alleviated.

Figure 5B shows a schematic isometric view of a seventh exemplary, non-limiting embodiment of a reflective optical coupling and beam profile shaping unit 1 according to the invention comprising a first parabolic-based free form reflective area 5, a second parabolic-based free form reflective area 6, a third parabolic-based free form reflective area 19 and an optical component 21 that is arranged in a recess 20 the optically transparent body 2 is provided with. The optical component 21, which can for example be a chip-isolator or a chip-filter, is arranged to be part of the optical path for optical radiation propagating through the optically transparent body 2. The optical component 21 is arranged in a recess 20 that is arranged between the first parabolic-based free form reflective area 5 and the second parabolic-based free form reflective area 6. As can be seen in figure 5A, for optical radiation that enters the optically transparent body 2 via either the first optical interface 3 or the second optical interface 4, there is a partially collimated space between the first parabolic-based free form reflective area 5 and the second parabolic-based free form reflective area 6. As mentioned above, after arranging the optical component 21 in the recess 20, the recess 20 can be sealed using optically transparent material having the same refractive index as the material of the optically transparent body 2 (not shown). In addition, at least one of the first parabolic-based free form reflective area 5, the second parabolic-based free form reflective area 6 and the third parabolic-based free form reflective area 19 can be configured to compensate for aberrations that are added to the optical beam profile by the optical component 21 that is arranged in the recess 20 between the first parabolic-based free form reflective area 5 and the second parabolic-based free form reflective area 6.

Figure 6 shows a schematic isometric view of a first exemplary, non-limiting embodiment of an opto-electronic assembly 100 comprising the first exemplary, non-limiting embodiment of the reflective optical coupling and beam profile shaping unit 1 according to the invention shown in figure 1A. The opto-electronic assembly 100 also comprises a PIC 9 that comprises an optical source 10 and an optical detector. The opto-electronic assembly 100 further comprises a first optical guiding structure 11 having a third optical interface 23 that is arranged at a first end part of the first optical guiding structure 11 and a fourth optical interface 24 that is arranged at a second end part of the first optical guiding structure 11. In accordance with the first exemplary, non-limiting embodiment of the opto-electronic assembly 100 shown in figure 6, the third optical interface 23 is arranged in optical communication with the optical source 10, and the fourth optical interface 24 is arranged in optical communication with the first optical interface 3 at the outer surface of the optically transparent body 2 of the reflective optical coupling and beam profile shaping unit 1. The first optical guiding structure 11 is configured to guide optical radiation emitted by the optical source 10 towards the first optical interface 3 of the optically transparent body 2.

Figure 6 shows that the first exemplary, non-limiting embodiment of the opto-electronic assembly 100 comprises a second optical guiding structure 12 having a fifth optical interface 13 that is arranged at a first end part of the second optical guiding structure 12 and a sixth optical interface 25 that is arranged at a second end part of the second optical guiding structure 12. The fifth optical interface 13 is arranged in optical communication with the second optical interface 4 at the outer surface of the optically transparent body 2.

In accordance with the first exemplary, non-limiting embodiment of the opto-electronic assembly 100 shown in figure 6, the second optical guiding structure 12 is an optical fiber 15. The person skilled in the art will appreciate that optical radiation emitted by the optical source 10 exiting the PIC 9 via the first optical guiding structure 11 typically has an asymmetric first optical beam profile. The optical fiber 15 typically comprises a core that has a symmetric cross-section. The reflective optical coupling and beam profile shaping unit 1, which is arranged to optically couple the first optical guiding structure 11 of the PIC 9 and the fifth optical interface 13 of the optical fiber 15 can shape the asymmetric first optical beam profile of the optical radiation entering the optically transparent body 2 via the first optical interface 3 into a symmetric and focused second optical beam profile exiting the optically transparent body 2 via the second optical interface 4 as a result of the above-described asymmetry between the first magnification of the first ellipsoidal-based free form reflective area 5 of the outer surface of the optically transparent body 2 and the second magnification of the second ellipsoidal-based free form reflective area 6 of the outer surface of the optically transparent body 2. Ideally, the symmetric and focused second optical beam profile of the radiation exiting the second optical interface 4 is adapted to the cross-section of the core of the optical fiber 15.

Figure 6 shows that the opto-electronic assembly 100 comprises a first alignment arrangement 14 that is configured and arranged to keep the fifth optical interface 13 of the optical fiber 15 and the second optical interface 4 of the outer surface of the optically transparent body 2 in optical alignment with each other. It is noted that at least one suitable intermediate material, such as an index-matching hydrophobic polymer and/or any other suitable intermediate material can be used in addition to the first alignment arrangement 14 to associate the fifth optical interface 13 of the optical fiber 15 with the second optical interface 4. It is noted that the embodiment of the first alignment arrangement 14 shown in figure 6 is exemplary and non-limiting in nature. Any suitable embodiment for achieving the same technical effect can be envisaged and falls within the scope of the present invention.

Figure 6 shows that the opto-electronic assembly 100 also comprises second alignment arrangements 17 that are configured and arranged to keep the fourth optical interface 24 of the first optical guiding structure 11 of the PIC 9 and the first optical interface 3 of the optically transparent body 2 in optical alignment with each other. The second alignment arrangements 17 allow establishing and maintaining the optical alignment in a passive way. It is noted that at least one suitable intermediate material, such as an index-matching hydrophobic polymer and/or any other suitable intermediate material can be used in addition to the second alignment arrangements 17 to associate the first optical guiding structure 11 of the PIC 9 with the first optical interface 3 of the optically transparent body 2.

The second alignment arrangements 17 shown in figure 6 comprise first fixing members 17a that are associated with the PIC 9 and second fixing members 17b that are associated with the optically transparent body 2 of the reflective optical coupling and beam profile shaping unit 1. The first fixing members 17a and the second fixing members 17b are configured as elongated resilient form-locking members. It is noted that the first fixing members 17a and the second fixing members 17b can be configured in any suitable way, for example as at least one of elongated resilient members and elongated clamping members. Therefore, the embodiment of the second alignment arrangements 17 shown in figure 7A is exemplary and non-limiting in nature. Any suitable embodiment of the first fixing members 17a and the second fixing members 17b of the second alignment arrangements 17 that can achieve the same technical effect can be envisaged and falls within the scope of the present invention.

It is noted that for the sake of simplicity in figures 7A, 7B and 7C the second optical guiding structure 12 is an optical fiber 15, although the second optical guiding structure 12 can for example also be an array of optical fibers, an optical waveguide of another PIC or an array of optical waveguides of another PIC.

Figure 7A shows a schematic isometric view of a second exemplary, non-limiting embodiment of the opto-electronic assembly 100 comprising the third exemplary, non-limiting embodiment of the reflective optical coupling and beam profile shaping unit 1 according to the invention shown in figure 2A. The opto-electronic assembly 100 comprises a first alignment arrangement 14 that is configured and arranged to keep the fifth optical interface 13 of the optical fiber 15 and the second optical interface 4 of the optically transparent body 2 in optical alignment with each other. The first alignment arrangement 14 is provided with a groove 16 that is configured to receive and support the optical fiber 15. A clamp 18 that is associated with the first alignment arrangement 14 is used to releasably associate the optical fiber 15 with the first alignment arrangement 14. In accordance with the second exemplary, non-limiting embodiment of the opto-electronic assembly 100 shown in figure 7A, the groove 16 is a V-shaped groove. However, it is noted that any other suitable shape for the groove can also be envisaged.

Figure 7B shows a schematic isometric view of a third exemplary, non-limiting embodiment of the opto-electronic assembly 100 comprising the third exemplary, non-limiting embodiment of the reflective optical coupling and beam profile shaping unit 1 according to the invention shown in figure 2A. The first alignment arrangement 14 comprises a first part 14a that is arranged on top of the PIC 9 and a second part 14b that is arranged on top of the first part 14a. Both the first part 14a and the second part 14b are provided with a groove 16 that is configured and arranged to receive the optical fiber 15. By enclosing the optical fiber 15, the first part 14a and the second part 14b of the first alignment arrangement 14 can establish and maintain the optical alignment of the fifth optical interface 13 of the optical fiber 15 and the second optical interface 4 of the optically transparent body 2. In the event that additional fixation of the optical fiber 15 is required, suitable fixing means such as for example a clamp and/or an adhesive can be used.

Figure 7C shows a schematic isometric view of a fourth exemplary, non-limiting embodiment of the opto-electronic assembly 100 comprising the third exemplary, non-limiting embodiment of the reflective optical coupling and beam profile shaping unit 1 according to the invention shown in figure 2A. Both the PIC 9 and the first alignment arrangement 14 are provided with a groove 16 that is configured and arranged to receive the optical fiber 15. By enclosing the optical fiber 15, the PIC 9 and the first alignment arrangement 14 can establish and maintain the optical alignment of the fifth optical interface 13 of the optical fiber 15 and the second optical interface 4 of the optically transparent body 2. In the event that additional fixation of the optical fiber 15 is required, suitable fixing means such as for example a clamp and/or an adhesive can be used. It is noted that the opto-electronic assembly 100 in accordance with the exemplary, non-limiting embodiments shown in figures 6, 7A, 7B and 7C can for example, but not exclusively, be used for telecommunication applications, LIDAR or sensor applications.

Figure 8 shows a schematic top view of a first exemplary, non-limiting embodiment of an opto-electronic system 200 comprising an opto-electronic assembly 100 that comprises a reflective optical coupling and beam profile shaping unit 1 according to the present invention as described in relation to, for example, figures 1A, 1D, 2A, 3A, 4A, 5A and 5B. The opto-electronic system 200 can for example, but not exclusively, be used for telecommunication applications, LIDAR or sensor applications. The opto-electronic system 200 can for example be one of a transmitter, a receiver, a transceiver, a coherent transmitter, a coherent receiver and a coherent transceiver.

The present invention can be summarized as relating to a reflective optical coupling and beam profile shaping unit 1 comprising an optically transparent body 2 having an outer surface that is provided with a first optical interface 3, a second optical interface 4, a first free form reflective area 5 having a first magnification, and a second free form reflective area 6 having a second magnification. Because the first magnification is different from the second magnification, an asymmetric first optical beam profile entering the optically transparent body via the first optical interface can be shaped into a symmetric second optical beam profile exiting the optically transparent body via the second optical interface. Similarly, a symmetric first optical beam profile can be shaped into an asymmetric second optical beam profile. The invention also relates to an opto-electronic assembly 100 comprising said unit 1, and to an opto-electronic system 200 comprising said assembly 100.

It will be clear to a person skilled in the art that the scope of the present invention is not limited to the examples discussed in the foregoing but that several amendments and modifications thereof are possible without deviating from the scope of the present invention as defined by the attached claims. In particular, combinations of specific features of various aspects of the invention may be made. An aspect of the invention may be further advantageously enhanced by adding a feature that was described in relation to another aspect of the invention. While the present invention has been illustrated and described in detail in the figures and the description, such illustration and description are to be considered illustrative or exemplary only, and not restrictive.

The present invention is not limited to the disclosed embodiments. Variations to the disclosed embodiments can be understood and effected by a person skilled in the art in practicing the claimed invention, from a study of the figures, the description and the attached claims. In the claims, the word "comprising" does not exclude other steps or elements, and the indefinite article "a" or "an" does not exclude a plurality. The mere fact that certain measures are recited in mutually different dependent claims does not indicate that a combination of these measures cannot be used to advantage. Any reference numerals in the claims should not be construed as limiting the scope of the present invention.

## Claims

1. A reflective optical coupling and beam profile shaping unit (1) that is suitable for attachment to a photonic integrated circuit, PIC, for covering an optical interface of the PIC, the reflective optical coupling and beam profile shaping unit (1) comprising an optically transparent body (2) having an outer surface that is provided with:
- a first optical interface (3) that is configured and arranged to enable transmission of optical radiation into or out of the optically transparent body (2), the optical radiation having a first optical beam profile that comprises a first spatial distribution and a second spatial distribution that are arranged orthogonal with respect to each other;
- a second optical interface (4) that is configured and arranged to enable transmission of the optical radiation out of or into the optically transparent body (2), the optical radiation having a second optical beam profile that at least has a different shape than the first optical beam profile;
- a first free form reflective area (5) and a second free form reflective area (6) that are arranged with respect to each other and with respect to the first optical interface (3) and the second optical interface (4) to provide an optical path for propagation of:
• optical radiation entering the optically transparent body (2) via the first optical interface (3) towards the second optical interface (4) as a result of reflections successively occurring at the first free form reflective area (5) and the second free form reflective area (6); or
• optical radiation entering the optically transparent body (2) via the second optical interface (4) towards the first optical interface (3), as a result of reflections successively occurring at the second free form reflective area (6) and the first free form reflective area (5);
wherein the first free form reflective area (5) is configured to have a first magnification to enable imaging of:
• a magnified version of the first spatial distribution of the first optical beam profile towards the second optical interface (4), said magnified version of the first spatial distribution being part of the second optical beam profile; or
• a magnified version of the first spatial distribution of the second optical beam profile towards the first optical interface (3), said magnified version of the first spatial distribution being part of the first optical beam profile;
wherein the second free form reflective area (6) is configured to have a second magnification, which is different from the first magnification of the first free form reflective area (5), to enable imaging of:
• a magnified version of the second spatial distribution of the first optical beam profile towards the second optical interface (4), said magnified version of the second spatial distribution being part of the second optical beam profile; or
• a magnified version of the second spatial distribution of the second optical beam profile towards the first optical interface (3), said magnified version of the second spatial distribution being part of the first optical beam profile.

2. The reflective optical coupling and beam profile shaping unit (1) according to claim 1, wherein at least one of the first free form reflective area (5) and the second free form reflective area (6) are at least partially covered with a coating (7) that comprises at least one of a dielectric material and a metal.

3. The reflective optical coupling and beam profile shaping unit (1) according to claim 1 or 2, wherein the outer surface of the optically transparent body (2) is provided with a flat reflective area (8) that is arranged with respect to the first optical interface (3) and the first free form reflective area (5) or with respect to the second optical interface (4) and the second free form reflective area (6) to be part of the optical path enabling propagation of:
- optical radiation entering the optically transparent body (2) via the first optical interface (3) towards the second optical interface (4) as a result of reflections successively occurring at:
• the flat reflective area (8), the first free form reflective area (5) and the second free form reflective area (6); or
• the first free form reflective area (5), the second free form reflective area (6) and the flat reflective area (8); or
- optical radiation entering the optically transparent body (2) via the second optical interface (4) towards the first optical interface (3), as a result of reflections successively occurring at:
• the flat reflective area (8), the second free form reflective area (6) and the first free form reflective area (5); or
• the second free form reflective area (6), the first free form reflective area (5) and the flat reflective area (8).

4. The reflective optical coupling and beam profile shaping unit (1) according to any one of the claims 1 to 3, wherein the first free form reflective area (5) has an ellipsoidal-based shape and is configured to have a first focal length and a second focal length for the first spatial distribution of the first optical beam profile or the second optical beam profile, respectively, the second focal length being larger than the first focal length, and the second free form reflective area (6) has an ellipsoidal-based shape and is configured to have a third focal length and a fourth focal length for the second spatial distribution of the first optical beam profile or the second optical beam profile, respectively, the fourth focal length being smaller than the third focal length, wherein the first optical interface (3) and the first free form reflective area (5) are arranged at a first distance, d1, with respect to each other as seen in a propagation direction of the optical radiation along the optical path, the first distance, d1, being smaller than or equal to the first focal length of the first free form reflective area (5), wherein the second optical interface (4) and the first free form reflective area (5) are arranged at a second distance, d2, with respect to each other as seen in the propagation direction of the optical radiation along the optical path via the second free form reflective area (6), the second distance, d2, being smaller than or equal to the second focal length of the first free form reflective area (5), wherein the first optical interface (3) and the second free form reflective area (6) are arranged at a third distance, d3, with respect to each other as seen in the propagation direction of the optical radiation along the optical path via the first free form reflective area (5), the third distance, d3, being smaller than or equal to the third focal length of the second free form reflective area (6), and wherein the second optical interface (4) and the second free form reflective area (6) are arranged at a fourth distance, d4, with respect to each other as seen in the propagation direction of the optical radiation along the optical path, the fourth distance, d4, being smaller than or equal to the fourth focal length of the second free form reflective area (6).

5. The reflective optical coupling and beam profile shaping unit (1) according to claim 3 or 4, wherein at least one of the first free form reflective area (5), the second free form reflective area (6) and the flat reflective area (8) are at least partially covered with a coating (7) that comprises at least one of a dielectric material and a metal.

6. The reflective optical coupling and beam profile shaping unit (1) according to claim 1, wherein the first free form reflective area (5) has a parabolic-based shape and is configured to have a fifth focal length for the first spatial distribution of the first optical beam profile or the second optical beam profile, respectively, and the second free form reflective area (6) has a parabolic-based shape and is configured to have a sixth focal length for the second spatial distribution of the first optical beam profile or the second optical beam profile, respectively, the sixth focal length being larger than the fifth focal length of the first free form reflective area (5), wherein the first optical interface (3) and the first free form reflective area (5) are arranged at a fifth distance, d5, with respect to each other as seen in a propagation direction of the optical radiation along the optical path, the fifth distance, d5, being smaller than or equal to the fifth focal length of the first free form reflective area (5), and wherein the first optical interface (3) and the second free form reflective area (6) are arranged at a sixth distance, d6, with respect to each other as seen in the propagation direction of the optical radiation along the optical path via the first free form reflective area (5), the sixth distance, d6, being smaller than or equal to the sixth focal length of the second free form reflective area (6).

7. The reflective optical coupling and beam profile shaping unit (1) according to claim 6, wherein the outer surface of the optically transparent body is provided with a third free form reflective area (19) that has a parabolic-based shape and is arranged with respect to the second free form reflective area (6) and the second optical interface (4) to be part of the optical path enabling propagation of:
- optical radiation entering the optically transparent body (2) via the first optical interface (3) towards the second optical interface (4) as a result of reflections successively occurring at the first free form reflective area (5), the second free form reflective area (6) and the third free form reflective area (19); or
- optical radiation entering the optically transparent body (2) via the second optical interface (4) towards the first optical interface (3), as a result of reflections successively occurring at the third free form reflective area (19), the second free form reflective area (6) and the first free form reflective area (5);
wherein the third free form reflective area (19) is configured to have a seventh focal length, and wherein the second optical interface (4) and the third free form reflective area (19) are arranged at a seventh distance, d7, with respect to each other as seen in the propagation direction of the optical radiation along the optical path, the seventh distance, d7, being smaller than or equal to the seventh focal length of the third free form reflective area (19).

8. The reflective optical coupling and beam profile shaping unit (1) according to claim 6, wherein the optically transparent body (2) is provided with at least one recess (20), each recess (20) being configured to receive at least one optical component (21), each optical component (21) being configured to manipulate optical radiation passing through the respective optical component (21) and being arranged in a respective recess (20) to be in the optical path between at least one of:
- the first optical interface (3) and the first parabolic-based free form reflective area (5);
- the first parabolic-based free form reflective area (5) and the second parabolic-based free form reflective area (6); and
- the second parabolic-based free form reflective area (6) and the second optical interface (4).

9. The reflective optical coupling and beam profile shaping unit (1) according to claim 7, wherein the optically transparent body (2) is provided with at least one recess (20), each recess (20) being configured to receive at least one optical component (21), each optical component (21) being configured to manipulate optical radiation passing through the respective optical component (21) and being arranged in a respective recess (20) to be in the optical path between at least one of:
- the first optical interface (3) and the first parabolic-based free form reflective area (5);
- the first parabolic-based free form reflective area (5) and the second parabolic-based free form reflective area (6);
- the second parabolic-based free form reflective area (6) and the third parabolic-based free form reflective area (19); and
- the third parabolic-based free form reflective area (19) and the second optical interface (4).

10. The reflective optical coupling and beam profile shaping unit (1) according to any one of the claims 1 to 9, wherein the optically transparent body (2) comprises at least one of glass and a polymer-based material that is transparent for optical radiation having a wavelength in at least a range from 1000nm to 2000nm, preferably from 1300nm to 1600nm.

11. An opto-electronic assembly (100) comprising:
- a reflective optical coupling and beam profile shaping unit (1) according to any one of the claims 1 to 10;
- a photonic integrated circuit, PIC, (9) comprising:
• an optical source (10) and/or an optical detector (22); and
• a first optical guiding structure (11) having a third optical interface (23) that is arranged at a first end part of the first optical guiding structure and a fourth optical interface (24) that is arranged at a second end part of the first optical guiding structure, the third optical interface (23) being arranged in optical communication with the optical source (10) or the optical detector (22), and the fourth optical interface (24) being arranged in optical communication with the first optical interface (3) at the outer surface of the optically transparent body (2) of the reflective optical coupling and beam profile shaping unit (1), the first optical guiding structure (11) being configured to guide optical radiation emitted by the optical source (10) towards the first optical interface (3) of the optically transparent body (2) or to guide optical radiation from the first optical interface (3) towards the optical detector (22); and
- a second optical guiding structure (12) having a fifth optical interface (13) that is arranged at a first end part of the second optical guiding structure and a sixth optical interface (25) that is arranged at a second end part of the second optical guiding structure, the fifth optical interface (13) being arranged in optical communication with the second optical interface (4) at the outer surface of the optically transparent body (2).

12. The opto-electronic assembly (100) according to claim 11, wherein the opto-electronic assembly (100) comprises at least one of:
- a first alignment arrangement (14) that is configured and arranged to keep the fifth optical interface (13) of the second optical guiding structure (12) and the second optical interface (4) of the optically transparent body (2) of the reflective optical coupling and beam profile shaping unit (1) in optical alignment with each other; and
- a second alignment arrangement (17) that is configured and arranged to keep the fourth optical interface (24) of the first optical guiding structure (11) of the PIC (9) and the first optical interface (3) of the optically transparent body (2) in optical alignment with each other.

13. The opto-electronic assembly (100) according to claim 12, wherein the second optical guiding structure (12) comprises at least one optical fiber (15), and the first alignment arrangement (14) is provided with at least one groove (16) that is configured to receive said at least one optical fiber (15).

14. The opto-electronic assembly (100) according to claim 12 or 13, wherein said second alignment arrangement (17) comprises first fixing members (17a) and second fixing members (17b) that are configured and arranged to associated the optically transparent body (2) of the reflective optical coupling and beam profile shaping unit (1) with at least one of the PIC (9) and the first alignment arrangement (14), the first fixing members (17a) and the second fixing members (17b) being configured as at least one of elongated resilient members, elongated form-locking members, and elongated clamping members.

15. An opto-electronic system (200) comprising an opto-electronic assembly (100) according to any one of the claims 11 to 14, wherein the opto-electronic system (200) is one of a transmitter, a receiver, a transceiver, a coherent transmitter, a coherent receiver and a coherent transceiver.
